# EUROPÄISCHE PATENTANMELDUNG

(11) **EP 3 979 222 A1**
(43) Veröffentlichungstag der Anmeldung: **06.04.2022**
(21) Anmeldenummer: 21198895.1
(22) Anmeldetag: 24.09.2021
(51) Int. Cl.: G08G 1/00, G08G 1/01

(54) **VERFAHREN UND SYSTEM ZUR ÜBERMITTLUNG POSITIONSBEZOGENER NOTRUFE VON BZW. AUS FAHRZEUGEN ZU EINER LEITSTELLE UND ZUR KOMMUNIKATION ZWSICHEN FAHRZEUGINSASSEN UND EINER LEITSTELLE**

(30) Priorität: 25.09.2020 DE 102020005877; 25.09.2020 DE 202020004048 U
(71) Anmelder: Eckert, Manuel, 14770 Brandenburg/Havel (DE)
(72) Erfinder: Eckert, Manuel, 14770 Brandenburg/Havel (DE); Naumann, Michael, Brandenburg/Havel (DE)
(74) Vertreter: Hertin und Partner Rechts- und Patentanwälte PartG mbB

(57) **Zusammenfassung**

Die Erfindung betrifft ein Verfahren zur Übermittlung positionsbezogener Notrufe von bzw. aus Fahrzeugen zu einer Leitstelle und zur Kommunikation zwischen Fahrzeuginsassen und einer Leitstelle. Es wird insbesondere ein Notruf-Datensatz aufgrund eines ausgelösten Notrufes durch ein in ein Fahrzeug integriertes System an ein Server-System über ein Mobilfunknetz bzw. Internet gesendet und als eine Notrufmeldung an eine Leitstelle übermittelt. Weiterhin kann der Notruf automatisiert durch ein verunfalltes Fahrzeug ausgelöst werden oder manuell durch einen in Not befindlichen Fahrzeuginsassen. Der generierte Notruf-Datensatz umfasst Standortdaten, Fahrzeugdaten, personenbezogene Daten, Audiodaten, Bilddaten und/oder Videodaten. Eine in dem Fahrzeug eingerichtete Bedienvorrichtung dient insbesondere als Eingabe für das manuelle Auslösen eines Notrufes durch den Fahrzeuginsassen.

Weiterhin betrifft die Erfindung ein System zur Übermittlung positionsbezogener Notrufe von bzw. aus Fahrzeugen zu einer Leitstelle und zur Kommunikation zwischen Fahrzeuginsassen und einer Leitstelle, wobei das System ein Fahrzeug, eine Leitstelle und ein Server-System umfasst.

## Beschreibung

Die Erfindung betrifft ein Verfahren zur Übermittlung positionsbezogener Notrufe von bzw. aus Fahrzeugen zu einer Leitstelle und zur Kommunikation zwischen Fahrzeuginsassen und einer Leitstelle. Es wird insbesondere ein Notruf-Datensatz aufgrund eines ausgelösten Notrufes durch ein in ein Fahrzeug integriertes System an ein Server-System über ein Mobilfunknetz bzw. Internet gesendet und als eine Notrufmeldung an eine Leitstelle übermittelt. Weiterhin kann der Notruf automatisiert durch ein verunfalltes Fahrzeug oder manuell durch einen in Not befindlichen Fahrzeuginsassen ausgelöst werden. Der generierte Notruf-Datensatz umfasst Standortdaten, Fahrzeugdaten, personenbezogene Daten, Audiodaten, Bilddaten und/oder Videodaten. Eine in dem Fahrzeug eingerichtete Bedienvorrichtung dient insbesondere als Eingabe für das manuelle Auslösen eines Notrufes durch den Fahrzeuginsassen.

Weiterhin betrifft die Erfindung ein System zur Übermittlung positionsbezogener Notrufe von bzw. aus Fahrzeugen zu einer Leitstelle und zur Kommunikation zwischen Fahrzeuginsassen und einer Leitstelle, wobei das System ein Fahrzeug, eine Leitstelle und ein Server-System umfasst.

### Hintergrund und Stand der Technik

Automatisierte Notrufe von Personenkraftwagen (PKW) werden derzeit nur über eine eCall-Telefonverbindung ("eCall" ist die Kurzform für "emergency call") zu einer Notrufnummer (in Europa 112) von einem PKW ausgelöst. Über diese Telefonverbindung wird zunächst über ein Inband-Modem das MSD (Minimal Set of Data) übertragen und anschließend auf die Sprachverbindung zwischen Leitstelle und Fahrzeug umgestellt. Das MSD hat eine Größe von 140 Byte und besteht aus den verschiedenen Informationen, wie bspw. die GPS-Position, die Fahrtrichtung, die Anzahl der Passagiere und einem Zeitstempel.

Das beschriebene sogenannte "Inband-Modem Verfahren" wurde bereits im Jahre 2002 entwickelt und entspricht somit nicht mehr den aktuellen Übertragungsverfahren, wie IP basierter Netzwerkprotokolle. Zudem stellt es einen unnötigen und komplexen Mehraufwand für die Konstruktion von PKW dar, die zunehmend bereits über eine Internet-Anbindung verfügen (z.B. für die herstellereigenen Services). Des Weiteren ist die Übertragungsmethode der eCall-Telefonverbindung, mit der Datenbegrenzung auf 140 Byte, nicht geeignet, um alle Informationen zu übertragen, die über das Fahrzeug, den Insassen und die Situation vorliegen und zur schnellen und gezielten Hilfe beitragen.

Bei dem in Planung befindlichen Next Generation eCall (NG eCall) bucht sich ein Fahrzeug bei einem Unfall in ein LTE-Netz ein. Das Telematik System wertet den "Network Support Indicator" für NG eCall aus und kann über das IP-Multimedia Subsystem unter Verwendung des Sitzungsinitiierungs- (SIP) sowie des Sitzungsbeschreibungsprotokolls (SDP) einen Notruf absetzen.

Das IP-Multimedia Subsystem, welches eine Vermittlungstechnik für IP-basierte Multimedia-Anwendungen im Fest- und Mobilfunknetz (LTE) ist, muss durch die Netzbetreiber bereitgestellt werden, was einen Mehraufwand und eine zusätzliche Fehlerquelle darstellt. Hinzu kommt das Routing des Anrufs zu einer Leitstelle (PSAP) durch den übermittelten Ressourcennamen im SIP, welches einen hohen Aufwand in der Zuordnung einer zuständigen Leistelle bedeutet.

Übergangsweise werden im Stand der Technik Car-Connect Adapter oder Unfallmeldestecker angeboten, die eine Verbindung zu einem Service-Center oder zu festgelegten Kontaktpersonen herstellen. Dabei treten Zeitverzögerungen auf und es ist keine direkte Kommunikation mit einer Leitstelle möglich, wodurch Fehler bei der Übermittlung bzw. der Weitergabe der Informationen begünstigt werden. Verschiedene Autohersteller bieten TPS-eCall (Third Party Service eCall) an. Ein Service-Center vermittelt hierbei einen Notruf in der Regel telefonisch an die zuständige Rettungsleitstelle. Diese Anrufe gehen ohne jegliche Priorität in den Leitstellen ein, sie werden nicht als Notruf erfasst und bearbeitet. Dadurch kommt es ebenfalls zu Zeitverzögerungen und Fehlern bei der mündlichen Übermittlung der Daten.

Für die in die Fahrzeuge integrierten eCall Systeme ist ferner werksseitig und im Rahmen von technischen Überprüfungen ein umfangreiches Testverfahren zur Bestätigung der Funktionsfähigkeit und Freigabe erforderlich. Im laufenden Betrieb der Fahrzeuge ist nachteilig keine automatische Testfunktion über das Mobilfunknetz und die Notrufempfangseinrichtungen vorgesehen.

In der Druckschrift DE 10 2018 006 711 A1 wird ein Verfahren und ein System für IP basierte Prozesse bei Notrufen und Servicediensten offenbart. Das Verfahren beruht auf einer "Nicht Rufnummern bezogenen Verbindungsherstellung in IP-Netzen". Hierbei wird mittels Funk- und/oder Satellitennavigation der Standort des mobilen Endgerätes des Nutzers ermittelt. Die gerätebasierte geografische Position wird, mit einer Notrufkategorie und weiteren Nutzerdaten, an einen Notrufkommunikationsserver gesendet, wobei die zuständige Notrufleitstelle, auf Grundlage einer geografischen Zuordnung zu den ihr zugeordneten Polygone, die Notrufmeldungen zyklisch abruft.

Diese Anordnung berücksichtigt die Endgeräte des Nutzers, wie Smartphone oder Tablet sowie eine stationäre Steuereinheit (Mini PC). Einsatzmöglichkeiten für ein mit besonderen Anforderungen zu realisierendes eCall-System für Fahrzeuge werden nicht aufgeführt.

### Aufgabe der Erfindung

Die Aufgabe der Erfindung ist demnach die Nachteile des Standes der Technik zu beseitigen und ein Verfahren und ein System zur Übermittlung positionsbezogener Notrufe von bzw. aus Fahrzeugen zu einer Leitstelle sowie eine direkte Kommunikation zwischen Fahrzeuginsassen und Leitstelle bereitzustellen, wobei eine Übertragung einer großen Datenmenge ermöglicht wird, sodass umfassende Zustandsinformationen an eine Leitstelle übermittelt werden können. Weiterhin war es Aufgabe der Erfindung ein Verfahren und/oder ein System bereitzustellen, welches simpel strukturiert, fehlerlos agiert und eine optimale Zuordnung zu einer zuständigen Leitstelle gewährleistet.

### Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein Verfahren zur Übermittlung positionsbezogener Notrufe von bzw. aus Fahrzeugen zu einer Leitstelle und zur Kommunikation zwischen Fahrzeuginsassen und der Leitstelle dadurch gekennzeichnet, dass ein Notruf-Datensatz aufgrund eines ausgelösten Notrufes durch ein in ein Fahrzeug integriertes System an ein Server-System über ein Mobilfunknetz bzw. Internet gesendet und als eine Notrufmeldung an eine Leitstelle übermittelt wird,
- wobei der Notruf durch einen in Not befindlichen Fahrzeuginsassen oder automatisiert durch ein verunfalltes Fahrzeug ausgelöst wird;
- wobei der Notruf-Datensatz Standortdaten, Fahrzeugdaten, personenbezogene Daten, Audiodaten, Bilddaten, Textdaten und/oder Videodaten umfasst;
- wobei das Fahrzeug eine Bedienvorrichtung aufweist und als Eingabe für das Auslösen eines Notrufes durch einen Fahrzeuginsassen dient.

Das erfindungsgemäße Verfahren trägt im besonderen Maße dazu bei, Rettungsaktionen von verunfallten Fahrzeugen und/oder in Not geratene Insassen zu verbessern. Das Verfahren nutzt dabei einen Ansatz, welcher vorteilhaft aktuelle Übertragungstechnologien und Kommunikationsmethoden für einen Informationsaustausch zwischen einer zuständigen Leitstelle und einem verunfallten Fahrzeug und/oder Fahrzeuginsassen anwendet, sodass eine bestmögliche Hilfeleistung durch die Leitstelle veranlasst werden kann. Gerade im Hinblick auf Notrufsysteme im Zusammenhang mit verunfallten Fahrzeugen wurde bislang auf veraltete Technologien zurückgegriffen. Insbesondere war es bislang nicht möglich umfassende Informationen über den Zustand des Fahrzeugs, der Insassen und der Umgebung simultan mit der Übermittlung eines Notrufs eines verunfallten Fahrzeugs und/oder Insassen an eine Leitstelle automatisch zu übermitteln. Ein Verfahren mit einem direkt in einem Fahrzeug integrierten System für die Absetzung eines automatischen und/oder manuellen Notrufes mit einer großen Datenmenge war bislang weder bekannt noch für einen Fachmann nahegelegt.

Das Verfahren führt vorteilhaft dazu, dass Rettungskräfte ein umfassendes Bild über einen Unfall und/oder eine Notsituation in Verbindung mit einem Fahrzeug erlangen können, bevor sie den Unfallort überhaupt erreicht haben, denn anhand des Übertragungsverfahrens insbesondere über das Internet können große Datenmengen an eine zuständige Leitstelle übermittelt werden, welche anschließend eine Rettungsaktion koordinieren kann. Während der Rettungsaktion kann die Leitstelle vorteilhaft weiterhin kontinuierlich neue Informationen erhalten, sodass die Rettungsaktion während der Ausführung angepasst werden kann. Folglich können gezielt Einsatzkräfte beordert werden, die individuell und effizient auf einen Unfall ausgerichtet sind. Zum Beispiel können Mittel bereitgestellt werden, welche sich für einen Unfall mit hochgiftigen Chemikalien eignen, wobei bei diesen Unfällen zum Beispiel Mittel für das Löschen eines Feuers nicht von Bedarf sein müssen und daher nicht mittransportiert werden.

Die Kombination der vorliegenden Erfindungsmerkmale führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinanderstehen. Ein weiterer wichtiger Vorteil des erfindungsgemäßen Verfahrens ist die Möglichkeit einer (automatischen) direkten Aussendung eines Notrufes auch im Falle eines Unfalls, in denen die Insassen einen Notruf nicht mehr absenden können, wie zum Beispiel bei Bewusstlosigkeit oder bei Bewegungsunfähigkeit. Gerade Landstraßen sind in der Nacht häufig sehr wenig befahren, sodass Hilfe durch weitere Fahrzeuge und ein Absenden eines Notrufes oftmals erst viel zu spät eintritt. Die unmittelbare automatische Absetzung des Notrufes durch das Fahrzeug spart wesentliche Zeit, welche im Falle eines schwerwiegenden Unfalls Leben retten kann, wobei mit Aussendung des Notrufes gleichzeitig automatisch umfassende Informationen über den Unfallort, Unfallbeteiligte, Unfallhergang etc. mitgesendet werden können. Derartige Informationen werden durch einen notrufsuchenden Insassen oder einer helfenden Person, die sich in unmittelbarer Umgebung des Unfallortes aufhält, bei der mündlichen Übermittlung an eine Leitstelle besonders häufig verfälscht, da sich diese Personen in einer hohen Stresssituation befinden. Das erfindungsgemäße Verfahren ermöglicht hingegen das Übermitteln von sensorbasierten Daten an eine Leitstelle, sodass die Leitstelle diese ungefiltert und unverfälscht aufnehmen und für einen Rettungsplan einarbeiten kann.

Weiterhin weist das erfindungsgemäße Verfahren durch das Vorhandensein eines Server-Systems den Vorteil auf, dass essentielle Daten für eine Rettungsaktion an entsprechende Leitstellen gelangen, ohne dass das im Fahrzeug integrierte System eine hohe Rechen- oder Speicherkapazitäten aufweisen muss. Aus diesem Grunde kann der Platzbedarf im Fahrzeug für die Ausgestaltung eines integrierten Systems geringgehalten werden, was Gewicht einspart und im Hinblick auf die Ausgestaltung von Fahrzeugen in der Leichtbauweise förderlich ist. Darüber hinaus kann das Server-System die erhaltenen bzw. aufgenommen Daten verschiedenen Stellen zukommen lassen. So kann zum Beispiel die Information an eine zuständige Leitstelle geleitet werden und/oder (gleichzeitig) an einen sich am Unfallort in der Nähe aufhaltenden Rettungsfahrzeug.

Durch die Trennung von Datenübertragung und Sprach- bzw. Videokommunikation hat das System bzw. Verfahren im Gegensatz zu NG eCall eine geringere Fehleranfälligkeit und eine höhere Kompatibilität zu vorhandenen Geräten/Endpunkten/Zwischenpunkten im Netzwerk. Die Datenübertragung wird zusätzlich wesentlich effektiver und effizienter ausgeführt,- ohne den bei einem NG eCall unnötigen Ballast (Protokoll-Overhead und Verbindungsverwaltung) einer SIP-Verbindung -, und benötigt daher weniger Datenvolumen (bei gleichem Informationsgehalt). Dadurch ist auch ein zeitlicher Vorteil erreichbar, der Menschenleben retten kann.

Die Erfinder waren mit verschiedenartigen Problemstellungen bei der Entwicklung des bevorzugten Verfahrens konfrontiert und mussten diese durch ein hohes Maß an erfinderischen Überlegungen lösen. Insbesondere war es herausfordernd notwendige Parameter zum automatisierten Auslösen eines Notrufes durch ein Fahrzeug zu erschließen, ohne dass ein Fehlalarm ausgelöst wird. Es war erforderlich ein Verfahren und/oder ein System zu entwickeln, welches ein auftretendes Ereignis, wie einen Unfall, korrekt einschätzt, um anschließend einen Notruf abzusenden. Für die Erkennung eines solchen Ereignisses können zum Beispiel Algorithmen der künstlichen Intelligenz eingesetzt werden, welche aufgenommene Sensordaten, wie Reifedruck, Motortemperatur, die Auslösung eines Airbags, Beschleunigung, Abstand gegenüber einem vorherfahrenden Fahrzeug etc. auswerteten und darauf basierend eine Wahrscheinlichkeit für ein eingetroffenes Ereignis wie zum Beispiel die Schwere eines Unfalls ausgeben kann. Darauf basierend kann das Verfahren und/oder System automatisiert einen Notruf absetzen. Insbesondere können Algorithmen des Supervised Learning verwendet werden, welche basierend auf real stattgefundenen und/oder simulierten Unfallsituationen trainiert werden. Die Entscheidung des im Fahrzeug integrierten Systems für die Absetzung eines Notrufes kann jedoch auch mit anderen herkömmlichen Algorithmen getroffen werden. Es können beispielweise in einfacher Weise bei der Überschreitung (oder Unterschreitung) eines Schwellwertes, wie zum Beispiel einer definierten Temperatur oder einem definierten Sauerstoffgehalt in der Luft der Fahrerkabine, ein automatisierter Notruf abgesetzt werden.

Eine Leitstelle (Einsatzleitstelle oder PSAP (engl.: Public safety answering point) ist erfindungsgemäß bevorzugt dazu eingerichtet, den Einsatzbetrieb einer zugeordneten Organisation zu leiten. Sie nimmt bevorzugt Informationen entgegen, wertet sie aus und koordiniert die angeschlossenen Dienste. Insbesondere im Rahmen der öffentlichen Daseinsvorsorge bestehen Leitstellen, die zur Brandbekämpfung, zur Erhaltung bzw. Rettung bedeutender Sachwerte, für den Katastrophenschutz, im medizinischen und technischen Rettungsdienst, zur Rettung von Menschenleben, in Belangen öffentlicher Sicherheit und Ordnung Notrufe entgegennehmen und Rettungsdienst, Feuerwehr, Technisches Hilfswerk, Polizei und andere Notfalldienste einsetzen. Sie sind in der Regel rund um die Uhr erreichbar und stehen untereinander mittels Telefon, Funk und im Sinne der Erfindung besonders stark bevorzugt auch mit Datenleitungen in Verbindung. In ganz Europa ist unter der Notrufnummer 112 ein Ansprechpartner erreichbar, der Hilfe aus den genannten Bereichen vermittelt.

Im Sinne der Erfindung ist ein Fahrzeug bevorzugt ausgesucht aus der Gruppe umfassend Landfahrzeuge, Luftfahrzeuge und Wasserfahrzeuge. Landfahrzeuge sind bevorzugt als ein Autobus, Motorrad, PKW, LKW, Fahrrad oder Zug ausgestaltet. Wasserfahrzeuge sind beispielweise Schiffe, wohingegen Luftfahrzeuge zum Beispiel ein Flugzeug oder ein Hubschrauber sind. Die bisherige Ausgestaltung IP-basierter Notrufsysteme hat sich insbesondere auf die Absetzung eines Notrufes ausgehend von mobilen Endgeräten wie Smartphones und/oder Tablet-Computern fokussiert. Die direkte Einbeziehung von Fahrzeugen in ein Notrufsystem war zwar auch für notwendig erachtet worden, indem bspw. das eCall-System entwickelt wurde, allerdings wurde in den Systemen des Standes der Technik nicht berücksichtigt, dass Fahrzeuge eine Vielzahl von Sensoren (bzgl. Fahrassistenzsysteme und/oder Autonomes Fahren) aufweisen, welche unter zu Hilfenahme weitaus verbesserte Rettungsaktionen ermöglichen.

Die Übermittlung der Daten im erfindungsgemäßen Verfahren erfolgt bevorzugt über das Mobilfunknetz bzw. Internet, welches bevorzugt auch als mobiles Internet bezeichnet wird. Dieses ist dem Fachmann bekannt und beschreibt die Bereitstellung einer Internetverbindung oder von Teilen davon (z. B. World Wide Web) auf Mobilgeräten wie insbesondere Laptops, Handys und Tablets. Das Fahrzeug im erfindungsgemäßen Verfahren, bevorzugt das dort integrierte System, weist eine Kommunikationseinheit auf, welche dazu konfiguriert ist, eine Verbindung zum mobilen Internet herzustellen. Eine derartige Verbindung basiert bevorzugt auf Verfahren ausgesucht aus der Gruppe umfassend, GPRS, EDGE, UMTS, LTE, WiMAX, LTE-Advance und/oder 5G. Auch Verbindungen über WLAN und/oder Satellitenzugang sind möglich.

In einer weiteren bevorzugten Ausführungsform erfolgt die Übermittlung der Daten (z.B. des Notruf-Datensatzes über alternative Funkübertragungen wie LoRaWAN. LoRaWAN (Long Range Wide Area Network) zeichnet sich vorteilhaft durch eine geringe Datenbandbreite und großer Reichweite sowie überaus niedrigem Stromverbrauch aus.

Das im erfindungsgemäßen Verfahren umfasste im Fahrzeug integrierte System weist bevorzugt eine sogenannte eCallPlus-Box auf. Die eCallPlus-Box ist dabei eine Vorrichtung bzw. eine Datenverarbeitungseinheit mit elektronischen Bauteilen zur Realisierung von für das Verfahren relevanten Funktionen. Wobei die eCallPlus-Box bevorzugt eine Recheneinheit, eine Speichereinheit, eine Ortungseinheit und/oder eine Kommunikationseinheit umfasst. Die eCallPlus-Box kann auf Sensoren des Fahrzeugs zugreifen und/ oder weist eigene Sensoren integriert auf. Beschleunigungs-, Feuchtigkeits-, und Luftdruck- Sensoren sind entsprechend des Einsatzzweckes der eCallPlus-Box für Land-, Wasser- und Luftfahrzeuge integriert. Die eCallPlus-Box besitzt optional einen Zusatz-Akku (USV), um auch im Falle einer Unterbrechung oder eines Ausfalls der Stromversorgung den Notruf absetzen zu können.

Weiterhin kann das Fahrzeug um einen eCallPlus-Adapter erweitert werden. Der Adapter kann bevorzugt nachträglich mit einer OBD-Buchse des Fahrzeugs verbunden werden. Der Adapter ist insbesondere für ältere Fahrzeugmodelle geeignet, welche durch ein nachträgliches Einbauen eines Adapters von den Vorteilen des erfindungsgemäßen Verfahrens profitieren können, obwohl die Fahrzeuge ursprünglich nicht für ein solches Verfahren/System konzipiert wurden. Der Adapter kann allerdings auch eingesetzt werden, um ein internes System mit einer aufweisenden eCallPlus-Box zu erweitern. Der eCallPlus-Adapter umfasst bevorzugt eine Recheneinheit, eine Speichereinheit, eine Ortungseinheit und/oder eine Kommunikationseinheit. Vorzugsweise kann der eCallPlus-Adapter ebenfalls auf die Sensoren des Fahrzeugs zugreifen.

In einer weiteren bevorzugten Ausführungsform ist die Bedienvorrichtung des Fahrzeugs als ein Multimedia Display ausgestaltet, welches in der Lage ist, eine bildhafte und/oder textbasierte Menüoberfläche zur Auswahl verschiedener Vorfälle einer jeweiligen Kategorie auszugeben. Bevorzugt handelt es sich um einen kapazitiven Bildschirm, welcher gleichzeitig sowohl als eine Informationsausgabe sowie als Eingabemittel für einen Insassen ausgestaltet ist. Die Darstellung auf dem Display geschieht bevorzugt durch ein installiertes Computerprogrammprodukt (App). Zur Auswahl sind verschiedene Vorfälle der jeweiligen Kategorien, wie Unfall, Verletzung, Krankheit, Feuer, Explosion, Überfall, Einbruch und Belästigung angeordnet.

In einer weiteren bevorzugten Ausführungsform weist das Fahrzeug (ergänzend oder alternativ) Schaltflächen als mechanische Tasten (zum Beispiel Druckknöpfe oder Schaltwippen) und/oder Softtouch-Buttons (berührungsempfindliche Sensoren) auf. Bevorzugt sind die Schaltflächen auch in Kombination mit einem verbindbarem Endgerät und einem auf dem Endgerät installierten Computerprogrammprodukt oder einem in das Fahrzeug integriertem System, im Cockpit oder an einem anderen erreichbaren Ort des Fahrzeuges, wie am Armaturenbrett oder der Mittelkonsole, installiert zu bedienen.

Im Sinne der Erfindung ist ein Endgerät bevorzugt ausgesucht aus der Gruppe umfassend Smartphone, Tablet-PC, Laptop, Navigationsgerät.

In einer weiteren bevorzugten Ausführungsform weist das Fahrzeug (ergänzend oder alternativ) eine Sprachsteuerung auf, welche die Bedienung des eCallPlus-Systems ermöglicht.

In einer weiteren bevorzugten Ausführungsformweist das Fahrzeug einen Voice over IP-Client - SIP/WebRTC-Client auf, welcher eine Sprach, Chat- und Videokommunikation ermöglicht. Zudem sind bevorzugt im Fahrzeug Schnittstellen für Kameras, die in einem Innenraum des Fahrzeugs liegen und/oder den Innenraum aufnehmen sowie Kameras, die außerhalb des Fahrzeugs angeordnet sind und/oder den Außenbereich aufnehmen, umfasst. Ferner weist das Fahrzeug bevorzugt auch Schnittstellen für ein oder mehrere Mikrofone und Lautsprecher auf. Kameras, Mikrofon, und Lautsprecher sind ferner bevorzugt über das im Fahrzeug integrierte System bzw. die eCallPlus-Box und/oder den eCallPlus-Adapter steuerbar und nutzbar.

In einer weiteren bevorzugten Ausführungsform ist das Verfahren dadurch gekennzeichnet, dass in einem dem Verfahren vorgelagerten Schritt ein Funktionstest durchgeführt wird, indem ein Testnotruf zum Server-System ausgelöst wird und durch eine Signalausgabe bestätigt wird. Ein vorgelagerter Funktionstest stellt sicher, dass ein fehlerhaftes Verfahren/System frühzeitig erkannt wird. Der Funktionstest läuft bevorzugt automatisiert im Hintergrund ab. Beispielweise kann vor jedem Motorstart des Fahrzeugs ein Funktionstest durchgeführt werden. Sofern ein Funktionstest Fehler aufweist, kann das Fahren des Fahrzeugs automatisch verhindert werden. So kann sichergestellt werden, dass jedes Fahrzeug - ausgestattet mit dem erfindungsgemäßen Verfahren - sich im Straßenverkehr mit einem funktionsfähigen Notrufsystem fortbewegt.

In einer weiteren bevorzugten Ausführungsform ist das Verfahren dadurch gekennzeichnet, dass werksseitig Funktionstests erfolgen, indem nach einer Registrierung ein Testnotruf zum Server-System ausgelöst und durch eine Leucht-Anzeige grün bestätigt wird. In alternativen Varianten kann die Leucht-Anzeige auch andere Farben annehmen. Die Bestätigung kann auch durch ein Tonsignal oder jegliches weitere von einem Menschen zu erfassende Signal ausgestaltet sein.

In einer weiteren bevorzugten Ausführungsform ist das Verfahren dadurch gekennzeichnet, dass bei der Auslösung eines Notrufes, automatisch oder durch Betätigen einer Schaltfläche, der Notrufdatensatz aus einem Notrufvorfall, den notrufbegleitenden und/oder notrufergänzenden Informationen generiert und zum Server-System über das Mobilfunknetz bzw. Internet, auch via Car-to-Car bzw. Car-to-X und/oder einer alternativen Funkübertragung, wie zum Beispiel LoRaWAN, übertragen wird. Der Notrufdatensatz kann bevorzugt Metadaten aufweisen.

Im Sinne der Erfindung sind Standortdaten bevorzugt Informationsträger, welche Angaben zur geografischen Position des Fahrzeugs oder allgemeine Angaben zu einem Ort des Fahrzeugs und/oder der Insassen aufweist. Die Standortdaten können anhand eines GPS-Signals, einer Mobilfunkverbindung und/oder einer WLAN-Verbindung erhalten werden. Standortdaten werden in der vorliegenden Druckschrift auch als Positionsdaten bezeichnet.

Weiterhin sind Fahrzeugdaten bevorzugt Daten, welche einen Informationswert über das Fahrzeug aufweisen. Diese können beispielsweise Zustandsdaten (Beschädigungen etc.) und/oder Daten des Fahrzeugtyps umfassen. Die Zustandsdaten werden bevorzugt durch im Fahrzeug umfasste Sensoren erhalten.

Bevorzugt sind personenbezogene Daten ausgesucht aus der Gruppe umfassend Alter, Geschlecht, Krankheiten, Größe, Blutverlust, Blutgruppe, Gewicht, Geisteszustand. Die personenbezogenen Daten sind jedoch nicht darauf beschränkt und können jegliche Informationen über die Insassen eines Fahrzeugs sowie Personen in der Umgebung eines Fahrzeugs umfassen.

In einer weiteren bevorzugten Ausführungsform ist der Notrufdatensatz größer als 140 Byte. Dem Fachmann ist jedoch ersichtlich, dass das erfindungsgemäße Verfahren auch Daten mit geringen Datenmengen (wie zum Beispiel MSD - Minimal Set of Data) verarbeiten und versenden kann und ist entsprechend nicht auf eine Datengröße beschränkt.

Im Sinne der Erfindung sind Notrufmeldungen bevorzugt ein konvertierter und/oder umgewandelter Notruf-Datensatz, sodass die Notrufmeldung kompatibel für die Leitstelle ist. Eine Wandlung des Notruf-Datensatzes in eine Notrufmeldung ist jedoch bevorzugt nicht immer notwendig. In alternativen Varianten des Verfahrens wird der Notruf-Datensatz ohne Wandlung an die Leitstelle übermittelt.

Ein in das Fahrzeug integriertes System umfasst bevorzugt eine Datenverarbeitungseinheit mit einer Recheneinheiten, Speichereinheit, Kommunikationseinheiten, Ortungseinheit. Wobei die Kommunikationseinheit eingerichtet ist, um sich in ein Telekommunikationsnetzwerk, auch via Car-to-Car bzw. Car-to-X und/oder einer alternativen Funkübertragung, wie zum Beispiel LoRaWAN, einzuwählen und/oder Daten über das Internet zu senden und empfangen. Die Ortungseinheit ist hingegen dazu eingerichtet, Positionsdaten zu erfassen. Bevorzugt weist diese eine Satellitenverbindung auf und kann dadurch über zum Beispiel GPS oder Galileo Positionsdaten erhalten. Das in das Fahrzeug integrierte System kann darüber hinaus eine eCallPlus-Box umfassen

In einer bevorzugten Ausführungsform weist das Fahrzeug eine Vielzahl von Sensoren auf. Diese erfassen und überwachen kontinuierlich den Zustand verschiedener Komponenten des Fahrzeugs. Das in das Fahrzeug integrierte System kann diese Daten automatisiert bei einem auslösenden Ereignis wie einem Unfall an die Leitstellen übertragen.

In einer weiteren bevorzugten Ausführungsform ist das Verfahren dadurch gekennzeichnet, dass in einem dem Verfahren vorgelagerten Schritt Gefahrenmeldungen über das Server-System im Fahrzeug empfangen werden, wobei die Gefahrenmeldung Standortdaten, Fahrzeugdaten, personenbezogene Daten, Audiodaten, Bilddaten, Textdaten und/oder Videodaten umfasst. Die Gefahrenmeldungen werden bevorzugt kontinuierlich vom im Fahrzeug integrierten System abgefragt und/oder übermittelt, sodass ein Fahrzeug bzw. der Fahrzeugführer während einer Fahrt gegenüber aufkommenden Gefahren gewarnt wird. Durch das frühzeitige Empfangen von Gefahrenmeldungen kann der Fahrzeugführer bzw. das Fahrzeug vorteilhaft rechtzeitig auf Gefahren reagieren, sodass Unfälle mit einer höheren Wahrscheinlichkeit verhindert werden können.

Weiterhin kann ein verunfalltes Fahrzeug ebenfalls zu einer Gefahr werden, sodass das Serversystem eine Gefahrenmeldung in Bezug auf das verunfallte Fahrzeug generiert und an Fahrzeuge in der Umgebung senden kann. Dies führt vorteilhaft dazu, dass die Fahrzeuge in der Umgebung vor einer Gefahr bzw. einem Unfall gewarnt werden. Zudem können die Fahrzeuge in der Umgebung ebenfalls ihre Hilfeleistung bereitstellen. Entgegen Gefahrenmeldungen aus dem Stand der Technik wie Stau und/oder Unfallansagen im Radio, führt das erfindungsgemäße Verfahren dazu, dass hochpräzise Angaben übermittelt werden können. Darüber hinaus können detailgetreue Warnungen auf der Bedienvorrichtung bzw. dem Multimediadisplay des Fahrzeugs visualisiert und kontinuierlich aktualisiert werden.

Gefahrenmeldungen können jegliche Informationen über eine Gefahr wie bspw. einen Unfall, eine (Wander-)Baustelle, eine auf einer Straße befindlichen Personen und/oder Wild oder Geisterfahrer darstellen. Die Gefahrenmeldungen können dabei einerseits automatisch ausgehend von einem Fahrzeug, von seinem Insassen manuell und/oder durch eine davon unabhängige Einrichtung, wie eine Radio Station, Leitstelle und/oder Polizeistation gemeldet werden.

In einer weiteren bevorzugten Ausführungsform ist das Verfahren dadurch gekennzeichnet, dass ein administrativer Bereich einer Leitstelle bzw. einer Rettungswache zugeordnet ist und durch eine geographische Information in Form eines oder mehrerer Polygone dargestellt wird,
- wobei die Leitstelle die Notrufmeldung abruft und/oder die Notrufmeldung der Leitstelle zugeleitet wird, wobei die Notrufmeldung über einen Webclient eines Server-Systems und/oder ein über eine Schnittstelle an das Server-System angebundenes Computerprogrammprodukt der Leitstelle angezeigt wird;
- wobei mit einer Annahme der Notrufmeldung durch die Leitstelle über den Webclient oder über das Computerprogrammprodukt per Sprache, Chat und/oder Video mit den Fahrzeuginsassen kommuniziert werden kann;
- wobei ein Routing des Notrufdatensatzes zur zuständigen Leitstelle als Notrufmeldung anhand integrierter Standortdaten auf Basis eines Satellitensignals und/oder einer Funkverbindung durch das Server-System erfolgt, wobei die Standortdaten einen geographischen Punkt umfassen;
- wobei der Leitstelle zugeordnete Polygone in einer GIS-Datenbank auf einem Datenbankserver gespeichert werden;
- wobei Polygone ermittelt werden, mit welchem sich der geografische Punkt überschneidet bzw. in welchem sich der geografische Punkt befindet, sodass die zuständige Leitstelle erfasst wird,
- alternativ zum Routing anhand der Standortdaten die zuständige Leitstelle mittels einer im Notrufdatensatz enthaltenen Kategorie oder Kennzeichnung zugeordnet wird.

Das vorliegende Verfahren ermöglicht durch die im vorhergehenden Absatz beschriebenen Merkmale vorteilhaft die genaue Zuordnung zwischen einem verunfallten Fahrzeug und/oder eines in Not befindlichen Insassen zu einer zuständigen Leistelle. Insbesondere in einem Bereich, indem die Zuständigkeit zweier Leitstellen zusammentreffen (in einem Grenzgebiet) kann das erfindungsgemäße Verfahren vorteilhaft eine präzise Zuordnung zwischen Unfallort bzw. -geschehen und zuständiger Leitstelle herstellen, da die ermittelten Standortdaten des Fahrzeugs im vorliegenden Verfahren höchstpräzise sind und auch die Zuständigkeit der Leitstellen über die Polygone einer hohen Präzision unterliegen.

Das Abrufen der Notrufmeldung von der Leitstelle gestaltet sich als aktive Abfrage, indem die Leitstelle zyklisch bevorzugt alle 5 Sekunden, stärker bevorzugt alle 2 Sekunden, eine Abfrage nach einer ihr zugeordneten neuen Notrufmeldung an das Server-System stellt. Die aktive Abfrage einer Leitstelle führt zu einem vorteilhaft besonders effizienten Verfahren. Bei einem Ausbleiben einer Abfrage einer Leitstelle (bspw. aufgrund eines Stromausfalls in der Leitstelle) wird der Notruf bevorzugt durch das erfindungsgemäße Verfahren nach einer Karenzzeit von bspw. 10 Sekunden einer zuvor definierten Ersatzleitstelle zugeordnet.

Im Falle von fehlenden Standortdaten, wird der Notruf ferner bevorzugt durch das erfindungsgemäße Verfahren einer Standard-Leitstelle zugeordnet. Somit besteht die Möglichkeit, dass ein Notruf einer Leitstelle zugeordnet wird, ohne dass dafür, zumindest nicht direkt, der aktuelle Standort des Fahrzeugs und/oder seiner Insassen herangezogen wird.

Jeder Leitstelle ist bevorzugt ein Zuständigkeitsbereich zugeordnet. Dieser ist in der Regel geographischer Natur und kann sich bspw. durch einen Landkreis, eine Stadt, ein Bundesland, ein Staat, eine über Ländergrenzen übergreifende Region oder einen Kontinent darstellen. Der Zuständigkeitsbereich lässt sich in einer Projektion auf eine zweidimensionale Fläche, wie zum Beispiel eine Landkarte als ein oder mehrere Polygone darstellen. Ein Vergleich zwischen Standortdaten des Fahrzeugs und Polygonen führt dabei bevorzugt zu einer Zuständigkeit einer Leitstelle.

Das erfindungsgemäße Server-System mit Clients beschreibt eine Möglichkeit, Aufgaben und Dienstleistungen innerhalb eines Netzwerkes zu verteilen. Die Aufgaben werden bevorzugt von Computerprogrammprodukten erledigt, die in Clients und Server unterteilt werden. Der Client kann auf Wunsch einen Dienst vom Server anfordern (z. B. Daten, wie neue Gefahrenmeldungen) Der Server, der sich bevorzugt auf einem anderen Rechner im Netzwerk befindet, beantwortet die Anforderung (das heißt, er stellt im Beispiel die neuen Gefahrenmeldungen bereit); üblicherweise kann ein Server gleichzeitig für mehrere Clients arbeiten. Dies führt vorteilhaft dazu, dass eine Leitstelle eine Vielzahl von Endgeräten aufweisen kann, welche ohne Installation eines Computerprogrammprodukts auf den jeweiligen Endgeräten über den Webclient auf alle benötigten Daten zugreifen können.

Das bevorzugte im Verfahren beanspruchten Computerprogrammprodukt, welches an eine Schnittstelle angebunden ist, ist bevorzugt eine für die Leitstelle eingerichtete Software oder Applikation, wobei die Schnittstelle als jegliches beliebige Endgerät ausgestaltet sein kann.

Eine GIS-Datenbank umfasst bevorzugt Daten im GIS-Datenformat. Als GIS-Datenformat werden standardisierte Datenformate von Geoinformationssystemen bezeichnet. In einem GIS werden verschiedene Datenformate zur Erfassung, Bearbeitung, Organisation, Analyse und Präsentation geografischer Daten verwendet. Es gibt vektorbasierte bzw. rasterbasierte Formate. Alle Geometriedaten können durch Sachdaten (Attribute) ergänzt werden. Dem Fachmann ist ein derartiges Datenformat sowie eine derartige Datenbank bekannt. Die GIS-Datenbank liegt bevorzugt auf einem Datenbankserver vor, welcher in dem Server-System integriert ist.

Das Routing basiert insbesondere auf die Zuleitung aufgrund von Standortinformation. Es kann jedoch auch bevorzugt sein, dass ein Notruf anhand einer Kategorie oder Kennzeichnung einer bestimmten Leitstelle zukommt. Bei außergewöhnlichen Umständen oder schwerwiegenden Verletzungen von Personen in Zusammenhang mit einem Fahrzeugunfall, können bestimmte medizinische Einsatzkräfte gefordert sein. Zum Beispiel besteht die Möglichkeit, dass ein Helikoptertransport erforderlich ist. Die zuständige Leitstelle ist demnach nicht unbedingt Standortbezogen, sondern muss nach der Art des Unfalls, also der Kategorie oder Kennzeichnung ausgewählt werden. Hierbei kann bevorzugt eine zuständige Leitstelle, die für derartige Vorkommnisse eingerichtet ist, unmittelbar eine Notrufmeldung erhalten, indem der Notrufdatensatz mit einer entsprechenden Kennzeichnung und/oder Kategorie ausgestaltet ist. So wird vorteilhaft Zeit gespart. Das Fahrzeug kann dabei bevorzugt anhand von Sensoren und Algorithmen der künstlichen Intelligenz eine selbständige Entscheidung treffen und Spezialkräfte anfordern.

In einer weiteren bevorzugten Ausführungsform ist das Verfahren dadurch gekennzeichnet, dass die Notrufmeldung zusätzlich direkt an die Einsatzkräfte übermittelt wird,
- wobei die Notrufmeldung, welche vorzugsweise einen geografischen Punkt und/oder eine Kategorie oder Kennzeichnung enthält, mit den Fahrzeugdaten und dem Kfz-Rettungsdatenblatt durch den Tablet PC und/oder das Smartphone der Einsatzkräfte vom Server-System abgerufen wird bzw. durch das Server-System zugeleitet wird und nach Auftragserteilung bzw. unaufgefordert anhand der Positionsdaten zum Unfallort navigiert wird;
- wobei mit einer Annahme der Notrufmeldung durch den Tablet PC und/oder dem Smartphone der Einsatzkräfte über den SIP- und/oder WebRTC-Client oder über das Computerprogrammprodukt per Sprache, Chat und/oder Video mit den Fahrzeuginsassen bzw. Notrufenden kommuniziert werden kann.

Indem die Notrufmeldung zusätzlich unmittelbar auch an Einsatzkräfte übermittelt wird, können diese in besonders kurzer Zeit auf einen Notfall, zum Beispiel verunfalltes Fahrzeug oder in Not befindlichen Fahrzeuginsassen, reagieren. Der Vorteil ist unter anderem auch darin zu sehen, dass keine Informationen an zwischengeschaltete Stellen verloren gehen können, da die Einsatzkräfte in direkter Weise alarmiert werden können. Ferner ermöglicht diese Form der Kommunikation auch Einsatzkräfte zu alarmieren, die sich bereits in der Nähe des Fahrzeug oder in Not befindlichen Fahrzeuginsassen befinden. Anschließend, sofern die Notrufmeldung, (aktiv) durch die Einsatzkräfte angenommen wird, kann über ein Endgerät der Einsatzkräfte, bevorzugt ein Tablet PC und/oder das Smartphone über einen SIP- und/oder WebRTC-Client oder über ein Computerprogrammprodukt mit den Fahrzeuginsassen bzw. Notrufenden kommuniziert werden. Diese zweistufige Verfahrensabfolge ermöglicht eine besonders effektive Kommunikation zwischen Notrufsuchenden und Einsatzkräften.

In einer weiteren bevorzugten Ausführungsform ist das Verfahren dadurch gekennzeichnet, dass der Notruf-Datensatz in Form
- eines JSON-Datenobjekts oder;
- von XML-Daten oder;
- eines Datenobjekts einer sonstigen Skript-, Auszeichnungs- oder Programmiersprache oder;
- einer bildbasierten Datei oder;
- einer Zeichen- oder Signalfolge oder;
- einem Minimal Set of Data
als Notrufmeldung für die Leitstellen bereitgestellt wird, wobei der Notrufdatensatz mit einem Protokoll der Netzwerkkommunikation, bevorzugt mittels HTTP(S), SMTP, SIP, übertragen wird, wobei die Notrufmeldung aus einem Übertragungsformat ausgelesen und/oder strukturgerecht zur Übernahme in einem Einsatzleitsystem angezeigt wird bzw. durch das Computerprogrammprodukt in das Einsatzleitsystem übernommen wird, wobei die Leitstelle per Sprache, Chat und/oder Video über eine Voice over IP Telefonanlage, insbesondere einem SIP- und/oder WebRTC-Server, direkt (z. B. mit einem SIP-Telefon) oder mittels eines Webclients, insbesondere eines SIP und/oder WebRTC-Clients, kommuniziert, und bevorzugt über eine Kamerasteuerung einer Kamera eines Endgerätes des Fahrzeuginsassen und/oder des Fahrzeugs Bilder und/oder Videos übertragen werden. Einer der großen Vorteile von JSON-Datenobjekten ist die Einfachheit der Implementierung und der Anwendung. Aufgrund des einfachen Aufbaus benötigt ein JSON-Datenobjekt bei der Anwendung nicht viele Ressourcen. So können umfangreiche Daten in einer annehmbaren Zeit ausgewertet werden. Das XML-Format kann vorteilhaft simpel an andere Systeme angebunden werden. Für die langfristige Dateiablage ist XML ebenso vorteilhaft geeignet und XML kann zudem simpel in andere Dateiformate gewandelt werden. Die Übertragung von Daten über Protokolle der Netzwerkkommunikation ermöglicht vorteilhaft eine Übertragung von großen Datenmengen, sodass dadurch die Liveübertragung von Video und detaillierte Fotofolgen ermöglicht werden. Weiterhin ermöglicht eine derartige Übertragung eine Steuerung aus der Ferne von Komponenten wie Kamera und/oder Mikrofon.

Vorzugsweise ist die oben genannte Form (JSON-Datenobjekt, XML-Daten, etc.), in der der Notruf-Datensatz der Leitstelle zur Verfügung gestellt wird, als Übertragungsformat anzusehen. Aus diesem Format wird die Notrufmeldung ausgelesen, visualisiert oder in das Einsatzleitsystem übernommen.

Ein Einsatzleitsystem ist im Sinne der Erfindung bevorzugt ein EDV-System, welches die Mitarbeiter von Leitstellen bei der Bewältigung ihrer Aufgaben unterstützt. Ein Einsatzleitsystem erfüllt bevorzugt im Wesentlichen folgende Aufgaben:
- Führung einer Übersicht der Einsatzmittel (z. B. einem Feuerwehrfahrzeug) und deren Verfügbarkeit bzw. Aufträgen
- Übersicht über die laufenden und anstehenden (zu disponierenden) Einsätze
- umfassende Dokumentation von Einsätzen
- Recherchemöglichkeit in den Protokollen abgeschlossener Einsätze
- Visualisierung von Stadtplänen sowie Lagedarstellung in einem Geoinformationssystem
- Unterstützung der Alarmierung

In einer weiteren bevorzugten Ausführungsform ist das Verfahren dadurch gekennzeichnet, dass die Kommunikation mit Fahrzeuginsassen,
- über die an das Telefonnetz angebundene Voice over IP Telefonanlage, insbesondere einem SIP- und/oder WebRTC-Server, mittels spezieller Einwahlnummer und zugehörigem Zahlencode bzw. DTMF-Code,
- oder über die in der Leitstelle vorhandene Telefonanlage, welche eine von der Voice over IP Telefonanlage, insbesondere einem SIP- und/oder WebRTC-Server, vergebene Rufnummer als SIP-Rufnummer eingerichtet hat,
realisiert wird.

Der Einsatz einer Voice-over-IP-Telefonanlage ermöglicht eine besonders gute Kommunikationsqualität. Ein großer Vorteil der IP-Telefonie ist, dass die vorhandene Netzinfrastruktur genutzt werden kann. Zudem bietet eine Voice-over-IP-Telefonanlage ein hohes Maß an Sicherheit gegen Störungen und Ausfälle.

Vorzugsweise erfolgt die Kommunikation mit Fahrzeuginsassen, nachdem eine Notrufmeldung durch die Leitstelle und/oder die Einsatzkräfte erhalten wurde.

In einer weiteren bevorzugten Ausführungsform ist das Verfahren dadurch gekennzeichnet, dass die Kommunikation mit Fahrzeuginsassen über eine Voice over IP Telefonanlage, insbesondere einem SIP- und/oder WebRTC-Server, realisiert wird und die Rufnummern dynamisch vergeben werden,
- wobei bei Auslösung eines Notrufs, dem eCallPlus-Adapter, dem in das Fahrzeug integrierte System mit einer eCallPlus-Box, dem Smartphone mit App oder dem Tablet mit App eine SIP-Rufnummer aus einer dafür vorgesehenen Menge von SIP-Rufnummern zugewiesen und an die Leitstelle übermittelt wird;
- wobei dem Disponenten der Leitstelle bzw. dem Bearbeiter, welcher den Notruf annimmt, ebenfalls eine SIP-Rufnummer aus einer dafür vorgesehenen Menge von SIP-Rufnummern zugewiesen wird;
- wobei die Kommunikationsverbindung aufgebaut wird, indem von der SIP-Rufnummer auf Leitstellen-Seite die SIP-Rufnummer oder der konfigurierte Alias/Name auf Fahrzeug-Seite gewählt wird.

In einer weiteren bevorzugten Ausführungsform ist das Verfahren dadurch gekennzeichnet, dass die Notrufmeldung auf dem Server-System gespeichert wird und, anhand der jeweiligen zugehörigen Rufnummer des Fahrzeugs bzw. des Notruf-auslösenden Geräts, abgerufen werden kann,
- wobei der Abruf über einen Webclient, die Leitstellensoftware oder ein anderes angebundenes Computerprogrammprodukt erfolgt, in dem die Rufnummer eingegeben wird;
- wobei der Abruf über die Leitstellensoftware oder ein anderes Computerprogrammprodukt automatisch anhand der Rufnummer erfolgt;

In einer weiteren bevorzugten Ausführungsform ist das Verfahren dadurch gekennzeichnet, dass die Übernahme der Notruf-Daten über einen Notruf-/eCall-Decoder realisiert wird,
- wobei dieser nicht nur das MSD aus der Telefonverbindung aufnimmt, sondern zusätzlich oder alternativ, den Notrufdatensatz vom Server-System anhand der Rufnummer abruft.

In einer weiteren bevorzugten Ausführungsform ist das Verfahren dadurch gekennzeichnet, dass der Notruf-Datensatz in Form eines Minimal Set of Data (MSD) zu einem TPS-eCall Server geleitet und durch ein Servicecenter entgegengenommen wird und über das Server-System in eine Notrufmeldung konvertiert und/oder integriert wird, wobei eine Zusammenarbeit des Servicecenter mit der Leitstelle auf der Grundlage der Notrufmeldung per Chat, Sprache, Video, über eine Konferenzschaltung oder Direktschaltung mit dem notrufenden Fahrzeug erfolgt.

Eine Zusammenarbeit zwischen einem Servicecenter und der Leitstelle ermöglicht eine verbesserte Hilfeleistung für ein verunfalltes Fahrzeug und/oder in Not geratener Insassen. Die Zusammenarbeit führt weiterhin dazu, dass das erfindungsgemäße Verfahren für Fahrzeuge integriert werden kann, welche bisher nur eines der herkömmlichen TPS-eCall (Third Party Service eCall) umfassen, ohne dass diese Fahrzeuge um- oder nachgerüstet werden müssen.

Der TPS-eCall Server ist bevorzugt als ein vom Server-System separater Server zu sehen. Dieser wird bevorzugt von einem externen Dienstleister, welcher bspw. das Servicecenter betreibt, bereitgestellt. Es kann sich dabei schon um die im Stand der Technik bekannten TPS-eCall Verfahren mit ihren vorhandenen Serverstrukturen handeln.

In einer weiteren bevorzugten Ausführungsform ist das Verfahren dadurch gekennzeichnet, dass bei Notrufen von in Not befindlichen Insassen oder verunfallten Fahrzeugen außerhalb eines Registrierungslandes die Ermittlung des im jeweiligen Land angewandten Notrufverfahrens anhand der Standortdaten in einem Satellitensignal und/oder einer Funkverbindung erfolgt und das Routing über das Server-System im Registrierungsland zum Server-System im Aufenthaltsland gesteuert und/oder durchgeführt wird;
- über das zentrale Server-System anhand der Standortdaten und/oder der Kategorie des Notrufes die zuständige Leitstelle oder das zuständige Server-System des Aufenthaltslandes ermittelt wird.

Das erfindungsgemäße Verfahren ist dadurch auch vorteilhaft länderübergreifend funktionsfähig. Insbesondere werden Verständigungsprobleme durch einen in Not befindlichen Insassen mit den zuständigen Leitstellen im Aufenthaltsland vermieden, da durch das Verfahren der Notrufdatensatz als Notrufmeldung mit allen essenziellen Informationen an die zuständige Leitstelle im Aufenthaltsland übermittelt wird. Die Notrufmeldung kann dabei bspw. durch Maschinenübersetzung in die jeweilige Landessprache des Aufenthaltslandes übersetzt werden.

Das Registrierungsland ist im Sinne der Erfindung das Land, in dem das Fahrzeug registriert ist und/oder die Fahrzeuginsassen ihren Lebensmittelpunkt haben. Das Aufenthaltsland kann hingegen ein Land sein, in welchem das Fahrzeug nicht registriert ist.

In einer weiteren bevorzugten Ausführungsform ist das Verfahren dadurch gekennzeichnet, dass aus den Informationen des Einsatzleitsystems ein Einsatzformular generiert wird und als ein Einsatzauftrag an ein Endgerät der Einsatzkräfte übermittelt wird, wobei eine Notrufinformation mit den Fahrzeugdaten vom Server-System und/oder ein Rettungsdatenblatt von einem Datenbankserver mit aufweisenden Kfz-Rettungsdatenblättern abgerufen wird. Dies führt vorteilhaft dazu, dass die Rettungskräfte ihre Anweisungen für einen jeweiligen Einsatz direkt auf einem dezentralen Endgerät, bevorzugt Tablet-Computer und/oder Smartphone, erhalten. Dies ermöglicht einen hohen Zeitgewinn für die Rettung und Hilfeleistung von in Not geratenen Insassen und/oder verunfallten Fahrzeugen.

Ein Rettungsdatenblatt stellt bevorzugt den Rettungskräften an der Einsatzstelle detaillierte Informationen zur Unterstützung der patientengerechten Rettung zur Verfügung. Auf einem Datenblatt sind bevorzugt alle Informationen in Bezug auf Rettungsarbeiten an einem Fahrzeug enthalten. Dies betrifft eine Darstellung des Fahrzeugs mit der Markierung verschiedener Bauteile (Tank, Batterie, Airbag, Gurtstraffer, Strukturversteifungen, Hochvoltbauteile und -leitungen) und möglicher Zusatzinformationen.

In einer weiteren bevorzugten Ausführungsform ist das Verfahren dadurch gekennzeichnet, dass bei fehlender Datenverbindung im Mobilfunknetz
- die Übertragung des Notruf-Datensatzes per SMS oder einem anderen Nachrichtendienst zu einem SMS-Gateway des Server-Systems erfolgt und anschließend als Notrufmeldung für die Leitstelle bereitgestellt wird;
- die Übertragung des Einsatzauftrages an das Endgerät der Einsatzkräfte per SMS oder einem anderen Nachrichtendienst erfolgt;
- die Übertragung des Notruf-Datensatzes mit einem alternativen Funkstandard, wie zum Beispiel LoRaWAN, zum Server-System erfolgt und anschließend als Notrufmeldung für die Leitstelle bereitgestellt wird;
- die Übertragung des Einsatzauftrages an das Endgerät der Einsatzkräfte mit einem alternativen Funkstandard, wie zum Beispiel LoRaWAN, erfolgt.

Insbesondere in Regionen bzw. in Gebieten, in denen die Infrastruktur für das mobile Internet noch nicht aktuellen Standards entspricht, ist die Gefahr für einen Notfall unweit höher, wie zum Beispiel in abgelegenen Dschungel- und/oder Wüstengegenden. Das erfindungsgemäße Verfahren ist dabei trotzdem in der Lage durch die Merkmale des vorhergehenden Absatzes einen Notruf - auch automatisch - an eine zuständige Leitstelle mit allen notwendigen Informationen zu übermitteln. Das Übertragen des Notrufdatensatzes über eine SMS ist vorteilhaft als ein Sicherheitssystem zu sehen, indem erst bei fehlgeschlagener IP-basierter Übertragung nachfolgend eine Übertragung über eine SMS erfolgt. Es kann auch bevorzugt sein - im Falle eines komplett ausbleibenden Mobilfunknetzes - dass die Übertragung über andere Methoden erfolgt, zum Beispiel kann eine Übertragung des Notrufdatensatzes auch über eine Sattelitenverbindung oder einem alternativen Funkstandard, wie zum Beispiel LoRaWAN, erfolgen.

In einer weiteren bevorzugten Ausführungsform ist das Verfahren dadurch gekennzeichnet, dass im Zusammenhang mit einem Funktionstest und/oder als eine separate zyklische Funktion ermittelt wird, ob ein Notruf oder eine Gefahrenmeldung in einem Umkreis des Fahrzeugs vorliegt und in einem solchem Fall die Information, bevorzugt mit Standortdaten, Zeitstempel und/oder einer Ereignisart, in einem Endgerät und/oder durch im Fahrzeug verbaute Anzeigen oder Leuchten angezeigt signalisiert wird,
- wobei Fahrzeuge mit Vorrang im Straßenverkehr (z.B. Blaulichtfahrzeuge) kontinuierlich ihre Standortdaten an das Server-System senden und/oder diese von den Leitstellen an das Server-System übermittelt werden;
- wobei Fahrzeuge, welche den Verkehr beeinträchtigen, wie bei Wanderbaustellen oder Pannen, zyklisch eine Gefahrenmeldung mit Standortdaten und weiteren Informationen an das Server-System senden,
- wobei Gefahrenmeldungen für einen nationalen Zugangspunkt für Verkehrsdaten vorzugsweise in einen DATEX II Datensatz und/oder in das landestypische Format konvertiert und übermittelt werden, um diese über Provider für weitere Verkehrsteilnehmer zur Routennavigation und/oder Verkehrssteuerung bereitzustellen,
- wobei eine Verkehrsbehörde Gefahrenmeldung, über Unfälle, stationäre Baustellen oder Wanderbaustellen bereitstellt und überwacht,
- wobei die Leitstelle Gefahrenmeldungen, über Unfälle und/oder andere Risiken bereitstellt und überwacht,
- im Falle eines entsprechenden Notrufs oder einer entsprechenden Gefahrenmeldung, die Information, wie z.B. "Unfall - Hilfe erforderlich" inkl. Zusatzinformationen lokal und/oder als Car-to-X Kommunikation über einheitliche Übertragungsprotokolle im Rahmen Intelligenter Verkehrssysteme - IVS und/oder über alternative Funkstandards, wie zum Beispiel LoRaWAN, und/oder über digitale Radiosignale (wie DAB oder DAB+) übertragen werden,
- im Falle eines entsprechenden Notrufs die Möglichkeit zur zusätzlichen Übertragung von Informationen an, sich in der Nähe befindliche, registrierte Ersthelfer und/oder Rettungskräfte, welche den Einsatz direkt oder indirekt gegenüber der Leitstelle bestätigen, besteht.

Das Verfahren ermöglicht dadurch ein intelligentes Notrufsystem, welches auf aktuelle Veränderungen von Bedingungen, Ereignissen reagieren kann und auch einen Fahrzeugführer oder ein Fahrzeug im Vorhinein vor den Veränderungen warnen kann. Das Verfahren weitet ihre Funktion demnach vorteilhaft über die ausschließliche Rettung von Fahrzeugen und in Not geratener Insassen aus und entspricht einem Verfahren für ein intelligentes Verkehrssystem. Dieses kann vorteilhaft auch im Zuge der Entwicklung des autonomen Fahrens implementiert werden.

DATEX II ist bevorzugt ein Datenaustauschstandard für den Austausch von Verkehrsinformationen und ist dem Fachmann aus dem Stand der Technik bekannt. DATEX II enthält z.B. Verkehrsereignisse, aktuelle Baustellen und andere verkehrsrelevante Sonderereignisse. Diese Daten liegen bevorzugt im XML-Format vor.

Die Car-to-X-Kommunikation ist ein aus dem Stand der Technik bekanntes Verfahren, bei der Fahrzeuge mit ihrer Umwelt ("x"), aber auch untereinander kommunizieren. Bei Car-to-X werden bevorzugt keine Bild- und Videodaten verarbeitet, sondern Sensordaten in Tabellenform, pro Übertragung nur wenige Kilobyte groß.

Im Sinne der Erfindung ist eine Ereignisart bevorzugt mit der weiter oben im Dokument erläuterten Kategorie eines Unfalls gleich zu setzen.

In einer weiteren bevorzugten Ausführungsform ist das Verfahren dadurch gekennzeichnet, dass in Fahrzeugen eine eCallPlus-Box und/oder ein eCallPlus-Adapter zur Funktionsausführung, Funktionsüberwachung und Kommunikation angeordnet sind,
- wobei für eine Anzeige und einen Empfang in den Fahrzeugen Multimedia Display, Tablet PC mit App, eine Smartphone App, ein Navigationsgerät und/oder ein in das Fahrzeug integriertes System angeordnet sind,
- wobei Kamera innen, Kamera außen, Mikrofon, Lautsprecher und/oder Beschleunigungs-, Feuchtigkeits-, und/oder Luftdruck- Sensoren entsprechend des Einsatzzweckes der eCallPlus-Box, eCallPlus-Adapter für Land-, Wasser- und Luftfahrzeuge angeordnet sind;
- wobei der eCallPlus-Adapter vorzugsweise an der OBD-Buchse des Fahrzeugs oder direkt verkabelt oder per Funkübertragung verbunden angeordnet ist.

Insbesondere durch einen eCallPlus-Adapter können herkömmliche Fahrzeuge so nachgerüstete werden, dass sie das erfindungsgemäße Verfahren umsetzen können. Weiterhin sind Kameras sowie Mikrofone, Lautsprecher von besonderem Vorteil zur Kommunikation zwischen Insassen und Leitstelle, da dadurch der Leitstelle ein umfassendes Bild über die Unfall- bzw. Notsituation übermittelt werden kann.

"Kamera innen" bezeichnet im Sinne der Erfindung bevorzugt eine oder mehrere Kameras, die in einem Innenraum des Fahrzeugs liegen und/oder einen Innenraum aufnehmen. "Kamera außen" bezeichnet hingegen eine oder mehrere Kameras, die außerhalb des Fahrzeugs angeordnet sind und/oder den Außenbereich des Fahrzeugs aufnehmen.

In einer weiteren bevorzugten Ausführungsform ist das Verfahren dadurch gekennzeichnet, dass einzelne Funktionsmodule des im Fahrzeug integrierten Systems so angeordnet werden, dass sie austauschbar und softwareseitig anpassbar sind, um so die Funktionalitäten über den Lebenszyklus des Fahrzeugs zu gewährleisten. Dies führt vorteilhaft dazu, dass das integrierte System geänderten Verfahrensweisen ohne einen großen Aufwand angepasst werden kann.

Die Vorteile und bevorzugten Ausführungsformen des erfindungsmäßen Verfahrens sind analog auf das erfindungsgemäße System zu übertragen und umgekehrt

In einer weiteren Ausführungsform betrifft die Erfindung ein System zur Übermittlung positionsbezogener Notrufe von bzw. aus Fahrzeugen zu einer Leitstelle und zur Kommunikation zwischen Fahrzeuginsassen und einer Leitstelle, bevorzugt für die Verwendung eines Verfahrens der eingangs genannten Art
umfassend ein Fahrzeug, eine Leitstelle und ein Server-System
dadurch gekennzeichnet, dass
- das Fahrzeug einen eCallPlus-Adapter und/oder ein in das Fahrzeug integriertes System mit einer eCallPlus-Box aufweist, wobei der eCallPlus-Adapter und die eCallPlus-Box dazu eingerichtet sind, einen Notruf-Datensatz zu generieren und an das Server-System zu übermitteln;
- das Server-System dazu eingerichtet ist,
   a) den Notruf-Datensatz als eine Notrufmeldung an die Leitstelle zu übermitteln und/oder als eine Notrufmeldung für eine Abfrage durch die Leitstelle bereitzustellen,
   b) die Leitstelle aus einer Vielzahl von Leitstellen zu ermitteln und der Notrufmeldung zuzuordnen
- die Leitstelle einen Webclient eines Server-Systems und/oder ein über eine Schnittstelle angebundenes Computerprogrammprodukt aufweist, wobei der Webclient des Server-Systems und das Computerprogrammprodukt konfiguriert sind, um eine Notrufmeldung anzunehmen und per Sprache, Chat und/oder Video mit Fahrzeuginsassen zu kommunizieren.

Vorzugsweise ist ein Smartphone oder ein Tablet PC mit App mit dem eCallPlus-Adapter oder der eCallPlus-Box verbunden, wobei das Smartphone oder der Tablet PC dazu eingerichtet sind, einen Notruf-Datensatz zu generieren und an das Server-System zu übermitteln.

Ein derartiges System zur Lösung der oben genannten Aufgabe ist aus dem Stand der Technik weder bekannt noch einem durchschnittlichen Fachmann nahegelegt. Das erfindungsgemäße System bietet insbesondere die Möglichkeit, Informationen über den Zustand des Fahrzeugs, der Insassen und der Umgebung simultan mit der Übermittlung eines Notrufs eines verunfallten Fahrzeugs und/oder Insassen an eine Leitstelle automatisch zu übermitteln. Weiterhin ist das System direkt in einem Fahrzeug integriert und ermöglicht die Absetzung auch eines manuellen Notrufes mit insbesondere großen Datenmengen.

### FIGUREN

Im Folgenden soll die Erfindung anhand von Figuren näher erläutert werden, ohne auf diese beschränkt zu sein.

### Kurzbeschreibunq der Abbildungen

- **Fig. 1**: Schematische Piktogramm-Darstellung einer bevorzugten Ausführungsform des erfindungsgemäßen Verfahrens mit einem Fahrzeug ausgestattet mit einer eCallPlus-Box
- **Fig. 2**: Schematische Piktogramm-Darstellung einer bevorzugten Ausführungsform des erfindungsgemäßen Verfahrens mit einem Fahrzeug ausgestattet mit einer eCallPlus-Adapter

### Detaillierte Beschreibung der Abbildungen

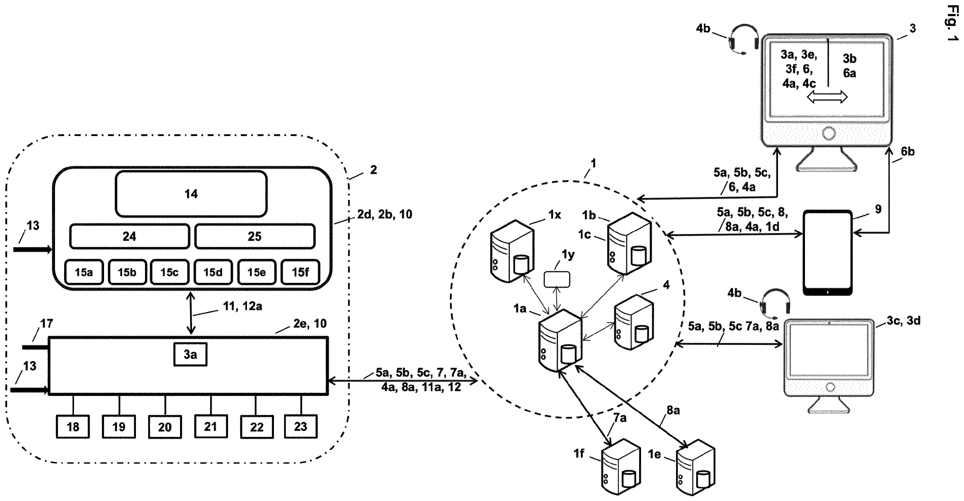

**Fig.1** zeigt eine schematische Piktogramm-Darstellung einer bevorzugten Ausführungsform des erfindungsgemäßen Verfahrens, wobei Informationsflüsse des Verfahrens illustriert werden. Das erfindungsgemäße Verfahren erweitert bevorzugt die aus dem Stand der Technik bekannten Funktionen eines Fahrzeug-Notrufsystems. So liegt in einem bevorzugten Fahrzeug **2** bereits eine aus dem Stand der Technik bekannte eCall-Box mit der Funktion TPS-eCall **7a** (Third Party Service eCall) angeordnete vor.

Für die Umsetzung des erfindungsgemäßen Verfahrens ist das Fahrzeug **2** darüber hinaus mit einer eCallPlus-Box **2e** oder einem eCallPlus-Adapter **2f** ausgerüstet. Weiterhin weist das Fahrzeug **2** ein Multimedia Display **2d** oder ein Navigationsgerät **2b** auf. Ein im Fahrzeug **2** umfasster SIP/WebRTC-Client **3a** ermöglicht eine Sprach, Chat- und Videokommunikation **4a,** Schnittstellen für Kamera innen **18,** Kamera außen **19,** Mikrofon **21** und Lautsprecher **22** sind darüber nutzbar. Beschleunigungs-, Feuchtigkeits-, und Luftdruck- Sensoren **20** sind entsprechend des Einsatzzweckes der eCallPlus-Box **2e** für Land-, Wasser- und Luftfahrzeuge **2** integriert. Die eCallPlus-Box **2e** besitzt optional einen Zusatz-Akku (USV), um auch im Falle einer Unterbrechung oder eines Ausfalls der Stromversorgung den Notruf absetzen zu können.

Das erfindungsgemäße Verfahren stellt für Notrufe an die Leitstelle **3** bevorzugt zwei Varianten bereit (automatisch und manuell). Dabei wird der automatische Notruf bevorzugt sensorgesteuert an die Rettungsleitstellen **3** ausgelöst. Der manuelle Notruf wird hingegen durch im Fahrzeug **2** angeordnete Schaltflächen oder Tasten in direkter Weise an die zuständige Rettungsleitstelle **3** oder über TPS-eCall **7a** durch die Servicedienste **3d** an die zuständige Leitstelle **3** geleitet.

Für Next Generation eCall (NG eCall) ist mit der eCallPlus-Box **2e** mittels Menüauswahl der Notruf-Applikation **10,** im Multimedia-Display **2d** des Fahrzeuges **2,** Tablet-PC mit App **2c,** bzw. Smartphone mit App **2a** oder Navigationsgerät **2b** ein Notruf zur Rettungsleitstelle **3,** zur Polizei und Verbindungen zu weiteren Empfängern herstellbar.

Die Notruf-Applikation **10** besteht bevorzugt aus einer bildhaften und/oder textbasierten Menüoberfläche. Die Notruf-Applikation **10** ist dabei bevorzugt in der Art eingerichtet, dass ein in Not befindlicher Fahrzeuginsasse eine Auswahl über eine Notruf-Kategorie treffen kann. Zur Auswahl sind verschiedene Vorfälle der jeweiligen Kategorien, wie Unfall, Verletzung, Krankheit, Feuer, Explosion, Überfall, Einbruch und Belästigung angeordnet.

Ergänzend oder alternativ werden Schaltflächen als mechanische Tasten und/oder Softtouch-Buttons, im Cockpit oder an einem anderen erreichbaren Ort des Fahrzeuges **2,** wie am Armaturenbrett oder der Mittelkonsole angeordnet.

Ein aktiver Notruf wird durch eine Anzeige "eCall aktiv" **14,** welche als Leuchte oder als in ein Display integrierte Anzeige bzw. Grafik ausgestaltet sein kann, signalisiert.

Bei der Auslösung eines Notrufes (z.B. durch Betätigen einer Schaltfläche) wird der Notrufdatensatz **7** aus dem Notrufvorfall, den notrufbegleitenden und notrufergänzenden Informationen generiert und zum Server-System **1** über das Mobilfunknetz bzw. Internet **12** übertragen.

Der Datensatz **7** wird wahlweise als
- JSON Datenobjekt,
- XML-Daten,
- Datenobjekt einer sonstigen Skript-, Auszeichnungs- oder Programmiersprache,
- bildbasierte Datei, wie QR Code,
- Zeichen- oder Signalfolge,
- Minimal Set of Data (MSD)
und als eine Notrufmeldung **6** für die Leitstellen 3 bereitgestellt.

Der Notrufdatensatz **7** wird dabei vorzugsweise mittels HTTP(S) oder SMTP **5b** übertragen. Eine weitere Variante sieht die Übertragung der Daten mittels SIP (Session Initiation Protocol) **5c** vor. Bei dieser Variante erfolgt das Routing bevorzugt zu einem Authentifizierungsserver **1x** und die Weiterleitung bevorzugt zum Server-System **1** anhand der in SIP **5c** integrierten Positionsdaten. Im Server-System **1** werden die Daten bevorzugt anhand der Positionsdaten als Notrufmeldung **6,** zum Abruf durch den Webclient des Server-Systems **3e** oder dem über eine Schnittstelle angebundenen Computerprogrammprodukt **3f** bereitgestellt.

Bei Fahrzeugen **2,** die sich außerhalb eines Registrierungslandes (im Ausland) aufhalten, erfolgt die Ermittlung und Kommunikation des im Land angewandten Notrufverfahrens anhand der Positionsdaten über den Server im Registrierungsland mittels Kommunikation mit dem Server im Aufenthaltsland. Alternativ wird ein zentrales Serversystem vorgesehen, dass anhand der Positionsdaten und Kategorie die zuständige Leitstelle des Aufenthaltslandes ermittelt und dieser die Notrufmeldung **6** zuordnet. Bei einer vom Registrierungsland abweichenden Schnittstelle zum Server-System **1** im Aufenthaltsland, wird das dort geforderte Schema des Notrufdatensatzes **7** durch das Server-System **1** im Registrierungsland aus den in der Notrufmeldung **6** enthaltenen Informationen gebildet und durch die Schnittstelle zum Server-System **1** im Aufenthaltsland übermittelt. Alternativ werden durch das Server-System **1** im Registrierungsland die notwendigen Informationen übermittelt, damit eine direkte Kommunikation mit dem Server-System **1** im Aufenthaltsland erfolgen kann.

Steht keine Datenverbindung im Mobilfunknetz zur Verfügung, erfolgt die Übertragung des Notrufdatensatzes **7** bevorzugt per SMS **11a** zu einem SMS-Gateway **1y** des Server-Systems **1** und wird ebenfalls als Notrufmeldung **6** für die Leitstellen **3** bereitgestellt.

Vorbereitend zur Inbetriebnahme wird die eCallPlus-Box **2e** am Authentifizierungsserver **1x** vorzugsweise mit der Mobilfunknummer, der IMEI Nummer, der Personen- bzw. Bürgeridentifizierungsnummer, der Fahrzeugidentifizierungsnummer, der Schiffs-Bootkennzeichnung und/oder dem Luftfahrzeugkennzeichen registriert. Weitere Fahrzeugdaten und die Rettungsdatenblätter für Feuerwehren **1d**, vorzugsweise vom Verband der Internationalen Kraftfahrzeughersteller (Link zum Datenbankserver Rettungsdatenblätter Kfz **1c),** werden bevorzugt in der Notruf-Applikation **10** oder im Datenbankserver **1b** gespeichert.

Werksseitig, sowie im Rahmen von technischen Überprüfungen, besteht die Möglichkeit Funktionstests vorzunehmen, indem ein Testnotruf zum Server-System **1** ausgelöst wird und durch eine grüne Leucht-Anzeige **24** oder eine in ein Display integrierte Anzeige bzw. Grafik bestätigt wird. Zur Bedienung und Information sind bevorzugt anwendungsbezogen Schaltflächen, Schalter und/oder Leuchtanzeigen bzw. in ein Display integrierte Anzeigen/Grafiken angeordnet.

Mit einer Schaltfläche "Test" **15a** kann ein Testnotruf ausgelöst werden. Ebenso erfolgen während der Fahrt zyklisch Funktionstests. Die grüne Leucht-Anzeige **24** oder eine in ein Display integrierte Anzeige bzw. Grafik bestätigt die Funktionsfähigkeit der Verbindung. Eine rote Leucht-Anzeige **25** oder eine in ein Display integrierte Anzeige bzw. Grafik und/oder eine Audioausgabe weist auf einen fehlerhaften Verbindungstest hin.

Der einer Leitstelle **3** zugeordnete administrative Bereich, wie Stadt- und/oder Landkreis(e), wird durch eine geographische Information in Form eines oder mehrerer Polygone, als deren äußere Begrenzung, dargestellt und in einer verbindbaren GIS-Datenbank, Datenbankserver **1b**, gespeichert. Bei der Ermittlung des zugehörigen Polygons zu einem geografischen Punkt, wird bevorzugt aus der Datenbank, Datenbankserver **1b**, das Polygon ermittelt, mit welchem sich der geografische Punkt überschneidet.

Von der Leitstelle **3** erfolgt bevorzugt ein Abruf der Notrufmeldungen **6,** wobei über den Webclient des Server-Systems **3e** oder über ein mittels Schnittstelle angebundenes Computerprogrammprodukt **3f** die Notrufmeldung **6** angezeigt wird und diese zuvor erforderlichenfalls aus dem Übertragungsformat ausgelesen wird. Die Informationen werden strukturgerecht zur Übernahme in das Einsatzleitsystems **3b** angezeigt oder sind durch das über eine Schnittstelle angebundene Computerprogrammprodukt **3f** bereits in das Einsatzleitsystem **3b** übernommen.

Mit einer Annahme des Notrufes kann per Sprache, Chat und/oder Video über das Notruf-Kommunikations-System, der Voice over IP-Telefonanlage - SIP/WebRTC-Server **4** direkt oder mittels SIP/WebRTC-Client **3a** kommuniziert werden.

Im Falle eines TPS-eCall **7a** (Third Party Service eCall) wird der Notrufdatensatz **7** bevorzugt als MSD, oder der jeweils herstellerspezifische Datensatz, zum TPS-eCall Server **1f** geleitet. Der Notruf wird bevorzugt durch ein Servicecenter **3d** entgegengenommen und bevorzugt an das Server-Systems **1** geleitet und in eine Notrufmeldung **6** konvertiert. Die Zusammenarbeit mit der Leitstelle **3** erfolgt bevorzugt auf der Grundlage der Notrufmeldung **6** per Chat, Sprache, Video **4a,** wobei eine Konferenzschaltung mit dem notrufenden Fahrzeug **2** ermöglicht wird.

Alternativ wird in Regionen mit eCallPlus der Notruf TPS-eCall **7a** direkt zum TPS-eCall Server **1f** geroutet und anschließend zum Server-System **1** weitergeleitet und in eine Notrufmeldung **6** konvertiert. Eine weitere Alternative stellt die direkte Übermittlung der Notruf-Daten von Fahrzeugen **2** mit TPS-eCall **7a** an das Server-System **1** dar.

Im Zusammenhang mit einem Funktionstest (wahlweise alle 60 Sekunden) wird bevorzugt ermittelt, ob ein Notruf oder eine Gefahrenmeldung **8a** im Umkreis (1 km - konfigurierbar, auch geschwindigkeitsabhängig) vorliegt. Wenn ein Notruf vorliegt, erfolgt z.B. die Information "Unfall-Hilfe erforderlich" und kann als Car-to-X Kommunikation über einheitliche Übertragungsprotokolle im Rahmen Intelligenter Verkehrssysteme (IVS) weitergeleitet werden, vorzugsweise an, sich in der Nähe befindliche, registrierte Ersthelfer und/oder Rettungskräfte, welche den Einsatz gegenüber der Leitstelle **3** bestätigen.

Zusätzlich wird die Gefahrenmeldung **8a,** gesteuert vom Server-System **1** übermittelt. Diese Gefahrenmeldung **8a** wird mit den Positionsdaten, Zeitstempel und der Ereignisart im Smartphone mit App **2a,** Navigationsgerät **2b,** Tablet PC mit App **2c** und/oder Multimedia Display **2d** angezeigt.

Fahrzeuge **2** mit Vorrang im Straßenverkehr (Blaulichtfahrzeuge) senden bevorzugt kontinuierlich ihre Positionsdaten bzw. werden diese bevorzugt von den Leitstellen **3** an das Server-System **1** übermittelt. Fahrzeuge **2,** welche den Verkehr beeinträchtigen, wie bei Wanderbaustellen oder Pannen, senden bevorzugt kontinuierlich eine Gefahrenmeldung **8a** mit den Positionsdaten und weiteren Informationen.

Zusätzlich werden Gefahrenmeldungen **8a** für den nationalen Zugangspunkt für Verkehrsdaten **1e** entsprechend EU-Verordnung 866/2013 in einen DATEX II Datensatz bzw. in das landestypische Format konvertiert und übermittelt, um diese für weitere Verkehrsteilnehmer zur Routennavigation bereitzustellen. Die Verkehrsbehörde 3c kann hier direkt Gefahrenmeldung **8a** einstellen und überwachen.

Alternativ oder zusätzlich kann die Übermittlung von Notrufen oder Gefahrenmeldungen **8a** auch über digitale Radiosignale (wie DAB bzw. DAB+) realisiert werden. Dabei werden die entsprechenden Informationen bzw. Daten durch die Leitstellen **3** oder eine entsprechend eingerichtete Instanz in das Radiosignal umgewandelt und/oder eingespeist und in Fahrzeugen **2** durch entsprechende Empfänger empfangen und verarbeitet und/oder dem eCallPlusverarbeitenden Gerät zugeleitet oder durch dieses verarbeitet. Auch durch stationäre Empfänger von digitalen Radiosignalen (wie DAB bzw. DAB+) können derartige Informationen bzw. Daten zu Notrufen oder Gefahrenmeldungen **8a** verarbeitet und angezeigt und/oder signalisiert werden, um z.B. vor Fahrtantritt über Unfall- und/oder Verkehrswarnungen informiert zu werden.

Bei einem Unfall wird der Notruf automatisch durch Sensoren **20** ausgelöst, kann jedoch innerhalb einer Karenzzeit mittels Schaltfläche Abbruch **15f** beendet werden. Ebenso ist es möglich, über die Schaltfläche manuell **15b** einen Notruf oder eine Gefahrenmeldung **8a** über die Schaltfläche Gefahrenmeldung **15e,** auszulösen. Bei einem Notruf wird der Notruf-Datensatz **7** mit den gespeicherten und aktuellen Positionsdaten zum Server-System 1 übermittelt und optional die Warnblinkanlage **23** vom Fahrzeug **2** aktiviert.

Bei Abruf der Notrufmeldung **6** wird diese im Webclient des Server-Systems **3e** oder im über eine Schnittstelle angebundenen Computerprogrammprodukt **3f** der Leitstelle **3** angezeigt und anschließend in das Einsatzleitsystem **3b** übernommen bzw. ist durch das über eine Schnittstelle angebundene Computerprogramm **3f** bereits in das Einsatzleitsystem **3b** übernommen. Mit dem SIP/WebRTC-Client **3a** werden über die Voice over IP-Telefonanlage - SIP/WebRTC-Server**4** Chat, Sprache, Video **4a** aktiviert. Mit dem Headset für Voice over IP **4b** wird eine Sprachverbindung zum Fahrzeug **2** hergestellt und über Tablet PC mit App **2c** und/oder über Smartphone mit App **2a** und/oder Mikrofon **21** und Lautsprecher **22** kommuniziert. Mit der Kamerasteuerung **4c** im Webclient des Server-System **3e** oder im über eine Schnittstelle angebundenen Computerprogrammprodukt **3f** können die Kameras Smartphone mit App **2a** und Fahrzeug **2** Kamera innen **18** und Kamera außen **19,** die vorzugsweise am Innenspiegel angeordnet sind, ausgewählt und Bilder bzw. Videos übertragen werden.

Für die im Umkreis befindlichen Fahrzeuge **2** wird die Gefahrenmeldung **8a** über den Webclient des Server-Systems **3e** oder dem über eine Schnittstelle angebundenen Computerprogrammprodukt **3f** der Leitstelle **3** aktiviert.

Aus den Informationen Einsatzleitsystem **3b** wird bevorzugt ein Einsatzformular **6a** generiert und als Einsatzauftrag **6b** an Tablet PC, Smartphone Einsatzkräfte **9** übermittelt. Diese rufen die Notrufinformation **8** mit den Fahrzeugdaten vom Server-System **1** und das Rettungsdatenblatt **1d** vom Datenbankserver Rettungsdatenblätter Kfz **1c** ab und navigieren anhand der Positionsdaten zum Unfallort.

Die einzelnen Funktionsmodule des Systems (Multimedia Display **2d,** eCallPlus-Box **2e)** werden so angeordnet, dass sie austauschbar (steckbar, lötbar) und softwareseitig anpassbar sind, um das System dem aktuellen Stand der Technik anzupassen und so die Funktionalitäten über den Lebenszyklus des Fahrzeugs **2** zu gewährleisten.

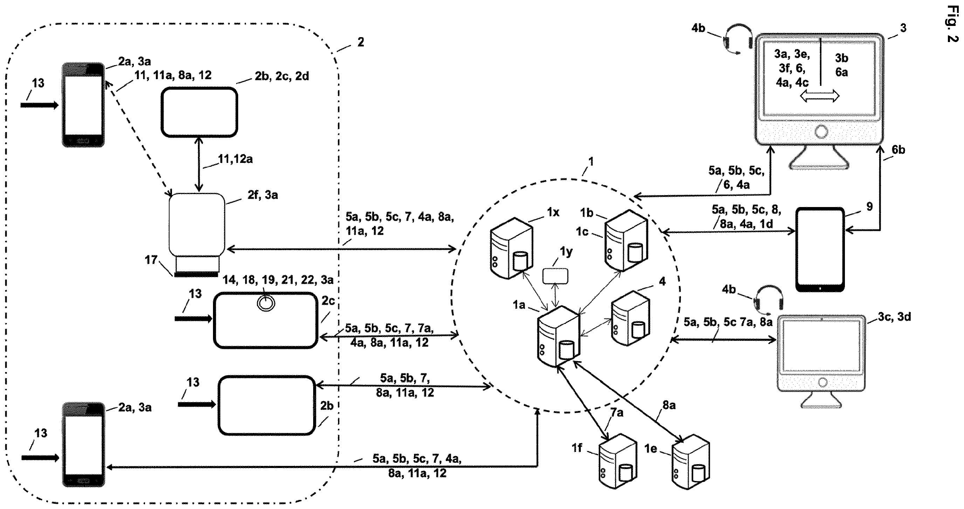

**Fig. 2** illustriert einen Informationsfluss einer bevorzugten Ausführungsform des erfindungsgemäßen Verfahrens anhand einer schematischen Piktogramm-Darstellung, wobei das Fahrzeug **2** mit einem eCall-Plus Adapter **2f** ausgestattet ist.

Der eCall-Plus Adapter **2f** ist im Vergleich zur eCallPlus-Box **2e** nachträglich in ein Fahrzeug über eine passende Schnittstelle eingebracht.

Ein Endgerät, bevorzugt ein Smartphone mit App **2a,** ein Tablet PC mit App **2c,** oder ein Navigationsgerät **2b** sind direkt über eine Funkverbindung, insbesondere WLAN oder Bluetooth **11,** bzw. Kabelverbindung, insbesondere Draht oder Glasfaser **12a,** mit dem eCallPlus-Adapter **2f,** einem Apparat mit elektronischen Bauteilen zur Realisierung der Funktionen bzw. einem Mini-PC, verbindbar. Der eCallPlus-Adapter **2f** ist vorzugsweise mit der OBD-Buchse **17** des Fahrzeugs **2** oder direkt verkabelt oder per Funkübertragung verbunden und besitzt optional einen Zusatz-Akku (USV). Darüber hinaus ist die Verwendung von Smartphone mit App **2a,** Tablet PC mit App **2c,** oder ein Navigationsgerät **2b** mit integrierten Sensoren **20** für einen automatischen Notruf und über das App Menü eine manuelle Notrufauslösung möglich. Die Kommunikation über die Voice over IP-Telefonanlage - SIP/WebRTC-Server **4** ist ebenso möglich, wie die Auswertung und Übertragung der im Fahrzeug **2** angeordneten Sensoren **20.**

### BEZUGSZEICHENLISTE

- 1: Server-System
- 1a: Anwendungsserver
- 1b: Datenbankserver
- 1c: Datenbankserver Rettungsdatenblätter Kfz
- 1d: Rettungsdatenblatt Kfz
- 1e: Nationaler Zugangspunkt für Verkehrsdaten
- 1f: TPS-eCall Server
- 1x: Authentifizierungsserver
- 1y: SMS-Gateway
- 2: Fahrzeug
- 2a: Smartphone mit App
- 2b: Navigationsgerät
- 2c: Tablet PC mit App
- 2d: Multimedia Display
- 2e: eCallPlus-Box
- 2f: eCallPlus-Adapter
- 3: Leitstellen
- 3a: SIP/WebRTC-Client
- 3b: Einsatzleitsystem
- 3c: Verkehrsbehörde
- 3d: Servicecenter TPS-eCall
- 3e: Webclient des Server-Systems
- 3f: über eine Schnittstelle angebundenes Computerprogramm
- 4: Voice over IP Telefonanlage - SIP/WebRTC-Server
- 4a: Chat, Sprache, Video
- 4b: Headset für Voice over IP
- 4c: Kamerasteuerung
- 5a: Authentifizierung
- 5b: HTTP(S) oder SMTP
- 5c: SIP - Session Initiation Protocol
- 6: Notrufmeldung
- 6a: Einsatzformular
- 6b: Einsatzauftrag
- 7: Notruf-Datensatz
- 7a: TPS-eCall
- 8: Notrufinformation
- 8a: Gefahrenmeldung
- 9: Tablet PC, Smartphone Einsatzkräfte
- 10: Notruf-Applikation
- 11: Funkverbindung, insbesondere WLAN oder Bluetooth
- 11a: SMS
- 12: Mobilfunknetz, Internet
- 12a: Kabelverbindung, insbesondere Draht oder Glasfaser
- 13: Satellitensignal
- 14: Anzeige eCall aktiv
- 15a: Schaltfläche Test
- 15b: Schaltfläche manuell
- 15c: Schaltfläche für Dritte
- 15d: Schaltfläche Polizei
- 15e: Schaltfläche Gefahrenmeldung
- 15f: Schaltfläche Abbruch
- 17: Anschluss OBD oder Direktverkabelung
- 18: Kamera innen
- 19: Kamera außen
- 20: Sensoren
- 21: Mikrofon
- 22: Lautsprecher
- 23: Warnblinkanlage
- 24: Leucht-Anzeige Grün
- 25: Leucht-Anzeige Rot

## Patentansprüche

1. Verfahren zur Übermittlung positionsbezogener Notrufe von bzw. aus Fahrzeugen (2) zu einer Leitstelle (3) und zur Kommunikation zwischen Fahrzeuginsassen und einer Leitstelle (3)
**dadurch gekennzeichnet, dass**
ein Notruf-Datensatz (7) aufgrund eines ausgelösten Notrufes durch ein in ein Fahrzeug (2) integriertes System an ein Server-System (1) über ein Mobilfunknetz bzw. Internet (12) und/oder einer alternativen Funkübertragung, wie LoRaWAN, gesendet und als eine Notrufmeldung (6) an eine Leitstelle (3) übermittelt wird,
- wobei der Notruf durch einen in Not befindlichen Fahrzeuginsassen oder automatisiert durch ein verunfalltes Fahrzeug (2) ausgelöst wird;
- wobei der Notruf-Datensatz (7) Standortdaten, Fahrzeugdaten, personenbezogene Daten, Audiodaten, Bilddaten, Textdaten und/oder Videodaten umfasst;
- wobei das Fahrzeug (2) eine Bedienvorrichtung aufweist und als Eingabe für das Auslösen eines Notrufes durch einen Fahrzeuginsassen dient.

2. Verfahren gemäß Anspruch 1
**dadurch gekennzeichnet, dass**
in einem dem Verfahren vorgelagerten Schritt Gefahrenmeldungen (8a) über das Server-System (1) im Fahrzeug (2) empfangen werden, wobei die Gefahrenmeldung (8a) Standortdaten, Fahrzeugdaten, personenbezogene Daten, Audiodaten, Bilddaten, Textdaten und/oder Videodaten umfasst.

3. Verfahren nach einem oder beiden der vorhergehenden Ansprüche
**dadurch gekennzeichnet, dass**
in einem dem Verfahren vorgelagerten Schritt ein Funktionstest durchgeführt wird, indem ein Testnotruf zum Server-System (1) ausgelöst wird und durch eine Signalausgabe bestätigt wird.

4. Verfahren nach einem oder mehreren der vorhergehenden Ansprüche
**dadurch gekennzeichnet, dass**
ein administrativer Bereich der Leitstelle (3) zugeordnet ist und durch eine geographische Information in Form eines oder mehrerer Polygone dargestellt wird,
- wobei die Leitstelle (3) die Notrufmeldung (6) abruft und/oder die Notrufmeldung (6) der Leitstelle (3) zugeleitet wird, wobei die Notrufmeldung (6) über einen Webclient des Server-Systems (3e) und/oder ein über eine Schnittstelle angebundenes Computerprogrammprodukt (3f) der Leitstelle (3) angezeigt wird;
- wobei mit einer Annahme der Notrufmeldung (6) durch die Leitstelle (3) über den Webclient des Server-Systems (3e) oder über das Computerprogrammprodukt (3f) per Sprache, Chat und/oder Video (4a) mit den Fahrzeuginsassen kommuniziert werden kann;
- wobei ein Routing des Notrufdatensatzes (7) zur zuständigen Leitstelle (3) als Notrufmeldung (6) anhand integrierter Standortdaten auf Basis eines Satellitensignals (13) und/oder einer Funkverbindung (11) durch das Server-System (1) erfolgt, wobei die Standortdaten einen geographischen Punkt umfassen;
- wobei der Leitstelle (3) zugeordnete Polygone in einer GIS-Datenbank auf einem Datenbankserver (1b) gespeichert werden;
- wobei Polygone ermittelt werden, mit welchem sich der geografische Punkt überschneidet bzw. in welchem sich der geografische Punkt befindet, sodass die zuständige Leitstelle (3) erfasst oder bestimmt wird;
- alternativ zum Routing anhand der Standortdaten die zuständige Leitstelle (3) mittels einer im Notrufdatensatz (7) enthaltenen Kategorie oder Kennzeichnung zugeordnet wird.

5. Verfahren nach einem oder mehreren der vorhergehenden Ansprüche
**dadurch gekennzeichnet, dass**
der Notruf-Datensatz (7) in Form
- eines JSON-Datenobjekts oder;
- von XML-Daten oder;
- eines Datenobjekts einer sonstigen Skript-, Auszeichnungs- oder Programmiersprache oder;
- einer bildbasierten Datei oder;
- einer Zeichen- oder Signalfolge oder;
- einem Minimal Set of Data
als Notrufmeldung (6) für die Leitstellen (3) bereitgestellt wird,
- wobei der Notrufdatensatz (7) mit einem Protokoll der Netzwerkkommunikation, bevorzugt mittels HTTP[S], SMTP (5b), SIP (5c), übertragen wird,
- wobei die Notrufmeldung (6) aus einem Übertragungsformat ausgelesen und/oder strukturgerecht zur Übernahme in ein Einsatzleitsystem (3b) angezeigt wird bzw. durch das Computerprogrammprodukt (3f) in das Einsatzleitsystem (3b) übernommen oder übergeben wird,
- wobei die Leitstelle (3) per Sprache, Chat und/oder Video über eine Voice over IP-Telefonanlage, insbesondere einem SIP und/oder WebRTC-Server (4), direkt oder mittels eines Webclient, insbesondere einem SIP- und/oder WebRTC-Client (3a), kommunizieren kann;
- bevorzugt über eine Kamerasteuerung (4c) eine Kamera eines Endgerätes des Fahrzeuginsassen und/oder des Fahrzeugs (2) ausgewählt und Bilder und/oder Videos übertragen werden.

6. Verfahren nach einem oder mehreren der vorhergehenden Ansprüche
**dadurch gekennzeichnet, dass**
der Notruf-Datensatz (7) in Form eines Minimal Set of Data (MSD) zu einem TPS-eCall Server (1f) geleitet und durch ein Servicecenter (3d) entgegengenommen wird und über das Server-System (1) in eine Notrufmeldung (6) konvertiert und/oder integriert wird;
- wobei eine Zusammenarbeit des Servicecenters (3d) mit der Leitstelle (3) auf der Grundlage der Notrufmeldung (6) per Chat, Sprache, Video (4a), über eine Konferenzschaltung oder Direktschaltung mit dem notrufenden Fahrzeug (2) erfolgt.

7. Verfahren nach einem oder mehreren der vorhergehenden Ansprüche
**dadurch gekennzeichnet, dass**
- bei Notrufen von in Not befindlichen Insassen oder verunfallten Fahrzeugen (2) außerhalb eines Registrierungslandes die Ermittlung des im jeweiligen Land angewandten Notrufverfahrens anhand der Standortdaten in einem Satellitensignal (13) und/oder einer Funkverbindung (11) erfolgt und das Routing über das Server-System (1) im Registrierungsland zum Server-System (1) im Aufenthaltsland gesteuert und/oder durchgeführt wird;
- über das zentrale Server-System (1) anhand der Standortdaten und/oder der Kategorie des Notrufes die zuständige Leitstelle (3) oder das zuständige Server-System (1) des Aufenthaltslandes ermittelt wird.

8. Verfahren nach einem oder mehreren der vorhergehenden Ansprüche
**dadurch gekennzeichnet, dass**
die Notrufmeldung (6) zusätzlich direkt an die Einsatzkräfte übermittelt wird,
- wobei die Notrufmeldung (6) mit den Fahrzeugdaten vom Server-System (1) und/oder ein Rettungsdatenblatt (1d) von einem Datenbankserver (1c) mit aufweisenden Kfz-Rettungsdatenblättern Kfz direkt an ein Endgerät der Einsatzkräfte (9) vom Server-System (1) abgerufen wird bzw. durch das Server-System (1) zugeleitet wird und nach Auftragserteilung bzw. unaufgefordert anhand der Positionsdaten zum Unfallort navigiert wird;
- wobei mit einer Annahme der Notrufmeldung (6) durch das Endgerät der Einsatzkräfte (9) über einen SIP- und/oder WebRTC-Client oder über ein Computerprogrammprodukt per Sprache, Chat und/oder Video (4a) mit den in Not befindlichen Insassen oder verunfallten Fahrzeugen (2) kommuniziert werden kann.

9. Verfahren nach einem oder mehreren der vorhergehenden Ansprüche
**dadurch gekennzeichnet, dass**
die Kommunikation mit den in Not befindlichen Insassen oder verunfallten Fahrzeugen (2),
- über eine an das Telefonnetz angebundene Voice over IP Telefonanlage, insbesondere einem SIP- und/oder WebRTC-Server (4), mittels spezieller Einwahlnummer und zugehörigem Zahlencode bzw. DTMF-Code,
- oder über die in der Leitstelle (3) vorhandene Telefonanlage, welche eine von der Voice over IP Telefonanlage, insbesondere einem SIP- und/oder WebRTC-Server (4), vergebene Rufnummer als SIP-Rufnummer eingerichtet hat,
realisiert wird.

10. Verfahren nach einem oder mehreren der vorhergehenden Ansprüche
**dadurch gekennzeichnet, dass**
die Kommunikation mit den in Not befindlichen Insassen oder verunfallten Fahrzeugen (2) über eine Voice over IP Telefonanlage, insbesondere einem SIP- und/oder WebRTC-Server (4), realisiert wird und die Rufnummern dynamisch vergeben werden,
- wobei bei Auslösung eines Notrufs, einem eCallPlus-Adapter (2f), dem in das Fahrzeug (2) integrierte System mit einer eCallPlus-Box (2e), einem Smartphone mit App (2a) oder einem Tablet-PC mit App (2c) eine SIP-Rufnummer aus einer dafür vorgesehenen Menge von SIP-Rufnummern zugewiesen und an die Leitstelle (3) übermittelt wird;
- wobei einem Disponenten der Leitstelle (3) bzw. einem Bearbeiter, welcher den Notruf annimmt, ebenfalls eine SIP-Rufnummer aus einer dafür vorgesehenen Menge von SIP-Rufnummern zugewiesen wird;
- wobei die Kommunikationsverbindung mit Chat, Sprache und/oder Video (4a) aufgebaut wird, indem von der SIP-Rufnummer auf Leitstellen-Seite (3) die SIP-Rufnummer oder der konfigurierte Alias/Name auf Fahrzeug-Seite (2) gewählt wird.

11. Verfahren nach Anspruch 10
**dadurch gekennzeichnet, dass**
die Notrufmeldung (6) auf dem Server-System (1) gespeichert wird und, anhand der jeweiligen zugehörigen Rufnummer des Fahrzeugs (2) bzw. des Notruf-auslösenden Geräts (2a, 2c, 2e, 2f) abgerufen werden kann,
- wobei der Abruf über einen Webclient (3e) oder ein anderes an die Leitstelle angebundenes Computerprogrammprodukt (3f) erfolgt, in dem die Rufnummer eingegeben wird;
- wobei der Abruf über einen Webclient (3e) oder ein anderes an die Leitstelle angebundenes Computerprogrammprodukt (3f) automatisch anhand der Rufnummer erfolgt.

12. Verfahren nach einem oder mehreren der vorhergehenden Ansprüche
**dadurch gekennzeichnet, dass**
die Übernahme des Notruf-Datensatzes (7) über einen Notruf-/eCall-Decoder realisiert wird, wobei dieser nicht nur das MSD aus der Telefonverbindung aufnimmt, sondern zusätzlich oder alternativ, den Notruf-Datensatzes (7) vom Server-System (1) anhand der Rufnummer abruft.

13. Verfahren nach Anspruch 5
**dadurch gekennzeichnet, dass**
aus den Informationen des Einsatzleitsystems (3b) ein Einsatzformular (6a) generiert wird und als ein Einsatzauftrag (6b) an ein Endgerät der Einsatzkräfte (9) übermittelt wird, wobei Notrufinformation (8) mit den Fahrzeugdaten vom Server-System (1) und/oder ein Rettungsdatenblatt (1d) von einem Datenbankserver (1c) mit aufweisenden Kfz-Rettungsdatenblättern Kfz abgerufen wird.

14. Verfahren nach einem oder mehreren der vorhergehenden Ansprüche
**dadurch gekennzeichnet, dass**
bei fehlender Datenverbindung im Mobilfunknetz
- die Übertragung des Notruf-Datensatzes (7) per SMS (11a) oder einem anderen Nachrichtendienst zu einem SMS-Gateway (1y) des Server-Systems (1) oder einer alternativen Funkübertragung, wie LoRaWAN, erfolgt und anschließend als Notrufmeldung (6) für die Leitstelle (3) bereitgestellt wird.

15. Verfahren nach Anspruch 13
**dadurch gekennzeichnet, dass**
bei fehlender Datenverbindung im Mobilfunknetz
- die Übertragung des Einsatzauftrages (6b) an das Endgerät der Einsatzkräfte (9) per SMS oder einem anderen Nachrichtendienst oder einer alternativen Funkübertragung, wie LoRaWAN, erfolgt.

16. Verfahren nach Anspruch 3
**dadurch gekennzeichnet, dass**
im Zusammenhang mit einem Funktionstest und/oder als eine separate zyklische Funktion ermittelt wird, ob ein Notruf oder eine Gefahrenmeldung (8a) in einem Umkreis des Fahrzeugs (2) vorliegt und in einem solchem Fall die Information, bevorzugt mit Standortdaten, Zeitstempel und/oder der Ereignisart, in einem Endgerät (2a, 2b, 2c, 2d) und/oder durch im Fahrzeug (2) verbaute Anzeigen oder Leuchten angezeigt und/oder signalisiert wird,
- wobei Fahrzeuge (2) mit Vorrang im Straßenverkehr (z.B. Blaulichtfahrzeuge) kontinuierlich ihre Standortdaten an das Server-System (1) senden bzw. diese von den Leitstellen (3) an das Server-System (1) übermittelt werden;
- wobei Fahrzeuge (2), welche den Verkehr beeinträchtigen, wie bei Wanderbaustellen oder Pannen, zyklisch eine Gefahrenmeldung (8a) mit Standortdaten und weiteren Informationen an das Server-System (1) senden,
- wobei Gefahrenmeldungen (8a) für einen nationalen Zugangspunkt für Verkehrsdaten (1e) vorzugsweise in einen DATEX II Datensatz bzw. in das landestypische Format konvertiert und übermittelt werden, um diese über Provider für weitere Verkehrsteilnehmer zur Routennavigation und/oder Verkehrssteuerung bereitzustellen,
- wobei eine Verkehrsbehörde (3c) Gefahrenmeldung (8a), über Unfälle, stationäre Baustellen oder Wanderbaustellen bereitstellt und überwacht,
- wobei die Leitstellen (3) Gefahrenmeldung (8a), über Unfälle und/oder andere Risiken bereitstellt und überwacht,
- im Falle eines entsprechenden Notrufs oder einer entsprechenden Gefahrenmeldung (8a), die Information, wie z.B. "Unfall - Hilfe erforderlich" inkl. Zusatzinformationen lokal und/oder als Car-to-X Kommunikation über einheitliche Übertragungsprotokolle im Rahmen Intelligenter Verkehrssysteme -IVS und/oder über digitale Radiosignale (wie DAB oder DAB+) übertragen werden,
- im Falle eines entsprechenden Notrufs die Möglichkeit zur zusätzlichen Übertragung von Informationen an, sich in der Nähe befindliche, registrierte Ersthelfer und/oder Rettungskräfte, welche den Einsatz direkt oder indirekt gegenüber der Leitstelle (3) bestätigen, besteht.

17. Verfahren nach einem oder mehreren der vorhergehenden Ansprüche
**dadurch gekennzeichnet, dass**
in Fahrzeugen (2) eine eCallPlus-Box (2e) und/oder ein eCallPlus-Adapter (2f) zur Funktionsausführung, Funktionsüberwachung und Kommunikation angeordnet sind,
- wobei für eine Anzeige und einen Empfang in den Fahrzeugen (2) Multimedia Display (2d), Tablet PC mit App (2c), eine Smartphone App (2a), ein Navigationsgerät (2b) und/oder ein in das Fahrzeug (2) integriertes System angeordnet sind,
- wobei Kamera innen (18), Kamera außen (19), Mikrofon (21), Lautsprecher (22) und/oder Beschleunigungs-, Feuchtigkeits-, und/oder Luftdruck- Sensoren (20) entsprechend des Einsatzzweckes der eCallPlus-Box (2e), eCallPlus-Adapter (2f) für Land-, Wasser- und Luftfahrzeuge (2) angeordnet sind;
- wobei der eCallPlus-Adapter (2f) vorzugsweise an der OBD-Buchse (17) des Fahrzeugs (2) oder direkt verbunden angeordnet ist.

18. Verfahren nach einem oder mehreren der vorhergehenden Ansprüche
**dadurch gekennzeichnet, dass**
einzelne Funktionsmodule des im Fahrzeug integrierten Systems so angeordnet werden, dass sie austauschbar und softwareseitig anpassbar sind, um so die Funktionalitäten über den Lebenszyklus des Fahrzeugs (2) zu gewährleisten.

19. System zur Übermittlung positionsbezogener Notrufe von bzw. aus Fahrzeugen (2) zu einer Leitstelle (3) und zur Kommunikation zwischen Fahrzeuginsassen und einer Leitstelle (3), bevorzugt für die Verwendung eines Verfahrens nach einem oder mehreren der Ansprüche 1-18
umfassend ein Fahrzeug (2), eine Leitstelle (3) und ein Server-System (1)
**dadurch gekennzeichnet, dass**
- das Fahrzeug (2) einen eCallPlus-Adapter (2f) und/oder ein in das Fahrzeug (2) integriertes System mit einer eCallPlus-Box (2e) aufweist, wobei der eCallPlus-Adapter (2f) und die eCallPlus-Box (2e) dazu eingerichtet sind, einen Notruf-Datensatz (7) zu generieren und an das Server-System (1) zu übermitteln;
- bevorzugt ein Smartphone (2a) oder ein Tablet PC mit App (2c) dem eCallPlus-Adapter (2f) oder der eCallPlus-Box (2e) verbunden und dazu eingerichtet sind, einen Notruf-Datensatz (7) zu generieren und an das Server-System (1) zu übermitteln;
- das Server-System (1) dazu eingerichtet ist,
a) den Notruf-Datensatz (7) als eine Notrufmeldung (6) an die Leitstelle (3) zu übermitteln und/oder als eine Notrufmeldung (6) für eine Abfrage durch die Leitstelle (3) bereitzustellen;
b) die Leitstelle (3) aus einer Vielzahl von Leistellen zu ermitteln und der Notrufmeldung zuzuordnen;
- die Leitstelle (3) einen Webclient des Server-Systems (3e) und/oder ein über eine Schnittstelle angebundenes Computerprogrammprodukt (3f) aufweist, wobei der Webclient des Server-Systems (3e) und das Computerprogrammprodukt (3f) konfiguriert sind, um eine Notrufmeldung (6) anzunehmen und per Sprache, Chat und/oder Video (4a) mit Fahrzeuginsassen zu kommunizieren.
